# EUROPÄISCHE PATENTSCHRIFT

(11) **EP 3 837 476 B1**
(45) Veröffentlichungstag und Bekanntmachung des Hinweises auf die Patenterteilung: **13.07.2022**
(21) Anmeldenummer: 19752714.6
(22) Anmeldetag: 15.08.2019
(51) Int. Cl.: F24H 1/10, F16L 53/37, C10G 35/02, C10G 9/36

(54) **EINRICHTUNG UND VERFAHREN ZUM ERHITZEN EINES FLUIDES IN EINER ROHRLEITUNG MIT GLEICHSTROM**
DEVICE AND METHOD FOR HEATING A FLUID IN A PIPE WITH DIRECT CURRENT
DISPOSITIF ET PROCÉDÉ DE CHAUFFAGE D'UN FLUIDE DANS UNE CONDUITE AVEC COURANT CONTINU

(30) Priorität: 16.08.2018 EP 18189370
(43) Veröffentlichungstag der Anmeldung: 23.06.2021
(60) Teilanmeldung: 22174373.5
(73) Patentinhaber: BASF SE, 67056 Ludwigshafen am Rhein (DE)
(72) Erfinder: KOCHENDOERFER, Kiara Aenne, 67056 Ludwigshafen (DE); LAIB, Heinrich, 67056 Ludwigshafen (DE); SHUSTOV, Andrey, 67056 Ludwigshafen (DE); KUEHN, Heinz-Juergen, 67056 Ludwigshafen (DE); JENNE, Eric, 67056 Ludwigshafen (DE); JACOB, Reiner, 67056 Ludwigshafen (DE)
(74) Vertreter: BASF IP Association
(86) Internationale Anmeldenummer: PCT/EP2019/071972
(87) Internationale Veröffentlichungsnummer: WO 2020/035575

(56) Entgegenhaltungen:
- DE-U1-202013 006 214
- FR-A1- 2 722 359

## Beschreibung

Die Erfindung betrifft eine Einrichtung und ein Verfahren zum Erhitzen eines Fluides in einer Rohrleitung.

Derartige Einrichtung sind grundsätzlich bekannt. Beispielsweise beschreibt WO 2015/197181 A1 eine Einrichtung zum Heizen eines Fluides mit zumindest einer elektrisch leitfähigen Rohrleitung zur Aufnahme des Fluides, und zumindest einer mit der mindestens einen Rohrleitung verbundenen Spannungsquelle. Die mindestens eine Spannungsquelle ist dazu ausgebildet, einen elektrischen Strom in der mindestens einen Rohrleitung zu erzeugen, der die mindestens eine Rohrleitung zum Heizen des Fluides erwärmt. Die mindestens eine Spannungsquelle weist M Außenleiter auf, wobei M eine natürliche Zahl größer oder gleich zwei ist. Die mindestens eine Spannungsquelle ist dazu ausgebildet, an den Außenleitern eine Wechselspannung bereitzustellen. Jene Wechselspannungen sind gegeneinander um 2π/M phasenverschoben. Die Außenleiter sind so mit der mindestens einen Rohrleitung elektrisch leitend verbunden, dass eine Sternschaltung gebildet wird.

Vorrichtungen zum Erhitzen eines Fluids in einer Rohrleitung sind grundsätzlich bekannt. Beispielsweise beschreibt FR 2 831 154 A1 ein elektrisches Erhitzen zur Unterstützung exothermer Oxidations- und endothermer Pyrolysereaktionen bei hohen Temperaturen in einem kontinuierlichen Kohlenwasserstoffreformierungsreaktor. US 2014/238523 A1 beschreibt eine Vorrichtung zum Heizen eines Pipelinesystems umfassend mindestens zwei Pipelines entlang denen sich ein elektrisches Widerstandsheizelement erstreckt. US 2016/115025 A1 ist ein System und Verfahren zum Erleichtern einer chemischen Reaktion. Das System kann einen elektrischen Leiter aufweisen, welcher eingerichtet ist eine chemische Mischung aufzunehmen. Der Leiter ist direkt mit einer Energiequelle verbunden und wird erhitzt, wenn die Energiequelle an ist. Wenn die chemische Mischung in dem Leiter ist und die Energiequelle an ist, wird die chemische Mischung erhitzt und eine chemische Reaktion kann ablaufen. CN 201135883 Y beschreibt einen Röhrenreaktor vom Sofortheiztyp, der ein in der Mitte angeordnetes Reaktionsrohr, eine außerhalb des Reaktionsrohrs bedeckte Wärmeisolationsschicht und eine elektrische Heizungssteuereinrichtung umfasst. Das Reaktionsrohr ist direkt mit der elektrischen Heizungssteuereinrichtung verbunden. Das Reaktionsrohr besteht aus leitendem Material. Das Reaktionsrohr wird als Heizelement verwendet. FR 2722359 A1 beschreibt, dass ein Fluid durch eine gleichförmige zentrale Bohrung einer Leitung tritt, deren Wandstärke axial gleichförmig zunimmt. Eine elektrische Energiequelle ist zwischen den Enden angeschlossen. Die Widerstandserwärmung pro Längeneinheit nimmt mit zunehmender Dicke ab, wobei die erforderliche Energieverteilung durch Auswahl geeigneter Abmessungen erzielt wird. US 2013/028580 A1 beschreibt eine Leitung zum Transport eines Kohlenwasserstoffs. Die Leitung umfasst ein hohles Innenrohr, das sich in Längsrichtung erstreckt, um das Fluid in dem Innenrohr zu transportieren, und eine elektrisch isolierende Außenfläche aufweist. Auf dem Innenrohr ist eine Heizschicht angeordnet, die in ein Polymermaterial eingebettete Kohlenstofffasern umfasst. Um die Heizschicht ist eine Wärmedämmschicht angeordnet. Um die Wärmedämmschicht ist ein Außenrohr angeordnet.

Das Außenrohr ist so ausgelegt, dass es einem Außendruck von mindestens 100 bar standhält. Abstandsmittel halten das Außenrohr in fester Weise vom Innenrohr beabstandet. Stromversorgungsmittel speisen der Heizschicht einen elektrischen Strom zu, um das Innenrohr zu erwärmen.

DE 20 2013 006214 U1 beschreibt einen Wärmetauscher für ein Gerät, der die folgenden Merkmale aufweist: a. mindestens eine Kühlmittelleitung mit einem ersten und einem zweiten Ende, durch die ein Kühlmittel leitbar ist und die aus elektrisch leitfähigem Material besteht, b. mindestens eine Halteklammer, die die Kühlmittelleitung zumindest teilweise unterstützt, und c1. eine erste elektrische Spannungsquelle, die mit dem ersten und zweiten Ende der Kühlmittelleitung oder mit den Enden mindestens eines ausgewählten Abschnitts der Kühlmittelleitung derart verbindbar ist, dass ein elektrischer Heizstrom in der Kühlmittelleitung fließt, und/oder c2. eine zweite elektrische Spannungsquelle, die mit mindestens einer Spulenanordnung benachbart zu der mindestens einen Kühlmittelleitung verbindbar ist, so dass durch ein Magnetfeld der Spulenanordnung ein elektrischer Heizstrom in der mindestens einen Kühlmittelleitung induzierbar ist.

Bekannte Einrichtung zum Erhitzen eines Fluides in einer Rohrleitung sind jedoch oft technisch kompliziert oder nur mit hohen technischen Aufwand zu realisieren. Es ist daher Aufgabe der vorliegenden Erfindung, eine Einrichtung und ein Verfahren zum Erhitzen eines Fluides bereitzustellen, welche die Nachteile bekannter Vorrichtungen und Verfahren zumindest weitgehend vermeiden. Insbesondere soll eine die Einrichtung und das Verfahren technisch einfach zu realisieren und durchzuführen sein und auch wirtschaftlich sein. Insbesondere soll die Einrichtung und das Verfahren bei der Erhitzung von Fluiden, welche eine Isolationsminderung verursachen, beispielsweise einer Verkokung bei Spaltöfen, anwendbar sein.

Diese Aufgabe wurde durch eine Einrichtung mit den Merkmalen des Anspruchs 1 und durch das Verfahren mit den Merkmalen des Anspruchs 12 gelöst. Bevorzugte Ausgestaltungen der Erfindung sind u. a. in den zugehörigen Unteransprüchen und Unteranspruchsverknüpfungen angegeben.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine Einrichtung zum Erhitzen eines Fluides vorgeschlagen. Unter einem "Fluid" wird im Rahmen der vorliegenden Erfindung ein gasförmiges und/oder flüssiges Medium verstanden. Das Fluid kann beispielsweise ausgewählt sein aus der Gruppe bestehend aus: Wasser, Wasserdampf, einer Verbrennungsluft, einem Kohlenwasserstoffgemisch, einem zu spaltenden Kohlenwasserstoff. Beispielsweise kann das Fluid ein thermisch zu spaltender Kohlenwasserstoff, insbesondere ein thermisch zu spaltendes Gemisch aus Kohlenwasserstoffen, sein. Beispielsweise kann das Fluid Wasser oder Wasserdampf sein und zusätzlich einen thermisch zu spaltenden Kohlenwasserstoff, insbesondere ein Gemisch aus thermisch zu spaltenden Kohlenwasserstoffen, aufweisen. Das Fluid kann beispielsweise ein vorgewärmtes Gemisch aus thermisch zu spaltenden Kohlenwasserstoffen und Wasserdampf sein. Auch andere Fluide sind denkbar. Unter "Erhitzen eines Fluides" kann ein Vorgang verstanden werden, welcher zu einer Änderung einer Temperatur des Fluides führt, insbesondere zu einem Anstieg der Temperatur des Fluides, beispielsweise zu einem Erwärmen des Fluides. Das Fluid kann beispielsweise durch das Erhitzen bis zu einem vorgegebenen oder vorbestimmten Temperaturwert erwärmt werden. Beispielsweise kann das Fluid auf eine Temperatur im Bereich von 400°C bis 1200°C erhitzt werden.

Die Einrichtung kann Teil einer Anlage sein. Beispielsweise kann die Anlage ausgewählt sein aus der Gruppe bestehend aus: einem Steamcracker, einem Steamreformer, einer Vorrichtung zur Alkandehydrierung. Beispielsweise kann die Anlage eingerichtet sein mindestens ein Verfahren durchzuführen ausgewählt aus der Gruppe bestehend aus: Steamcracking, Steamreforming, Alkandehydrierung.

Die Einrichtung kann beispielsweise Teil eines Steamcrackers sein. Unter "Steamcracking" kann ein Verfahren verstanden werden, bei welchem durch thermisches Cracken längerkettige Kohlenwasserstoffe, beispielsweise Naphtha, Propan, Butan und Ethan sowie Gasöl und Hydrowax, in Gegenwart von Wasserdampf in kurzkettige Kohlenwasserstoffe umgewandelt werden. Bei dem Steamcracking kann Wasserstoff, Methan, Ethen und Propen als Hauptprodukt, sowie u.a. Butene und Pyrolysebenzin erzeugt werden. Der Steamcracker kann eingerichtet sein das Fluid auf eine Temperatur im Bereich von 550°C bis 1100°C zu erwärmen.

Beispielsweise kann die Einrichtung Teil eines Reformerofens sein. Unter "Steamreforming" kann ein Verfahren zur Herstellung von Wasserstoff und Kohlenoxiden aus Wasser und kohlenstoffhaltigen Energieträgern, insbesondere Kohlenwasserstoffen wie Erdgas, Leichtbenzin, Methanol, Biogas oder Biomasse verstanden werden. Beispielsweise kann das Fluid auf eine Temperatur im Bereich von 200 °C bis 800 °C, bevorzugt von 400 °C bis 700 °C, erwärmt werden.

Beispielsweise kann die Einrichtung Teil einer Vorrichtung zur Alkandehydrierung sein. Unter einer "Alkandehydrierung" kann ein Verfahren zur Herstellung von Alkenen durch Dehydrierung von Alkanen, beispielsweise Dehydrierung von Butan zu Butenen (BDH) oder Dehydrierung von Propan zu Propen (PDH), verstanden werden. Die Vorrichtung zur Alkandehydrierung kann eingerichtet sein das Fluid auf eine Temperatur im Bereich von 400°C bis 700°C zu erwärmen.

Auch andere Temperaturen und Temperaturbereiche sind jedoch denkbar.

Die Einrichtung umfasst:
- mindestens eine elektrisch leitfähige Rohrleitung und/oder mindestens ein elektrisch leitfähiges Rohrleitungssegment zur Aufnahme des Fluides, und
- mindestens eine Gleichstrom- und/oder Gleichspannungsquelle, wobei jeder Rohrleitung und/oder jedem Rohrleitungssegment je eine Gleichstrom- und/oder Gleichspannungsquelle zugeordnet ist, welche mit der jeweiligen Rohrleitung und/oder mit dem jeweiligen Rohrleitungssegment verbunden ist, wobei die jeweilige Gleichstrom- und/oder Gleichspannungsquelle dazu ausgebildet ist, einen elektrischen Strom in der jeweiligen Rohrleitung und/oder in dem jeweiligen Rohrleitungssegment zu erzeugen, welcher die jeweilige Rohrleitung und/oder das jeweilige Rohrleitungssegment durch Joulesche Wärme, welche bei Durchgang des elektrischen Stromes durch leitendes Rohrmaterial entsteht, zum Erhitzen des Fluides erwärmt.

Unter einer Rohrleitung kann im Rahmen der vorliegenden Erfindung eine beliebige geformte Vorrichtung verstanden werden, welche eingerichtet ist das Fluid aufzunehmen und zu transportieren. Unter einem Rohrleitungssegment kann ein Teilbereich einer Rohrleitung verstanden werden. Die Rohrleitung kann mindestens ein symmetrisches und/oder mindestens ein unsymmetrisches Rohr aufweisen. Geometrie und/oder Oberflächen und/oder Material der Rohrleitung kann anhängig von einem zu transportierenden Fluid sein. Unter einer "elektrisch leitfähigen Rohrleitung" kann verstanden werden, dass die Rohrleitung, insbesondere das Material der Rohrleitung, eingerichtet ist elektrischen Strom zu leiten. Die Rohrleitung kann als ein Reaktionsrohr eines Reformerofens ausgebildet sein. Die Rohrleitung kann eingerichtet sein als Reaktionsrohr mindestens einer Anlage ausgewählt aus der Gruppe bestehend aus: einem Steamcracker, einem Steamreformer, einer Vorrichtung zur Alkandehydrierung.

Die Einrichtung weist eine Mehrzahl an Rohrleitungen und/oder Rohrleitungssegmenten auf. Die Einrichtung kann L Rohrleitungen und/oder Rohrleitungssegmente aufweisen, wobei L eine natürliche Zahl größer oder gleich zwei ist. Beispielsweise kann die Einrichtung mindestens zwei, drei, vier, fünf oder auch mehr Rohrleitungen und/oder Rohrleitungssegmente aufweisen. Die Einrichtung kann beispielsweise bis zu hundert Rohrleitungen und/oder Rohrleitungssegmente aufweisen. Die Rohrleitungen und/oder Rohrleitungssegmente können identisch oder verschieden ausgestaltet sein. Die Rohrleitungen und/oder Rohrleitungssegmente können symmetrische und/oder unsymmetrische Rohre und/oder Kombinationen davon aufweisen. Bei einer rein symmetrischen Ausgestaltung kann die Einrichtung Rohrleitungen und/oder Rohrleitungssegmente von einem identischen Rohrtyp aufweisen. Unter "unsymmetrische Rohre" und "Kombinationen von symmetrischen und unsymmetrischen Rohren" kann verstanden werden, dass die Einrichtung eine beliebige Kombination von Rohrtypen aufweisen kann, welche beispielsweise zudem beliebig parallel oder in Reihe verschaltet sein können. Unter einem "Rohrtyp" kann eine durch bestimmte Merkmale gekennzeichnete Kategorie oder Art von Rohrleitung und/oder Rohrleitungssegment verstanden werden. Der Rohrtyp kann mindestens durch ein Merkmal charakterisiert werden ausgewählt aus der Gruppe bestehend aus: einer horizontalen Ausgestaltung der Rohrleitung und/oder des Rohrleitungssegments; einer vertikalen Ausgestaltung der Rohrleitung und/oder des Rohrleitungssegments; einer Länge im Eintritt (L1) und/oder Austritt (L2) und/oder Übergang (L3); einem Durchmesser im Eintritt (d1) und Austritt (d2) und/oder Übergang (d3); Anzahl n von Pässen; Länge pro Pass; Durchmesser pro Pass; Geometrie; Oberfläche; und Material. Die Einrichtung kann eine Kombination von mindestens zwei verschiedenen Rohrtypen aufweisen, welche parallel und/oder in Reihe verschaltet sind. Beispielsweise kann die Einrichtung Rohrleitungen und/oder Rohrleitungssegmente von unterschiedlichen Längen im Eintritt (L1) und/oder Austritt (L2) und/oder Übergang (L3) aufweisen. Beispielsweise kann die Einrichtung Rohrleitungen und/oder Rohrleitungssegmente mit einer Asymmetrie der Durchmesser im Eintritt (d1) und/oder Austritt (d2) und/oder Übergang (d3) aufweisen. Beispielsweise kann die Einrichtung Rohrleitungen und/oder Rohrleitungssegmente mit einer unterschiedlichen Anzahl von Pässen aufweisen. Beispielsweise kann die Einrichtung Rohrleitungen und/oder Rohrleitungssegmente mit Pässen mit unterschiedlichen Längen pro Pass und/oder unterschiedlichem Durchmesser pro Pass aufweisen. Grundsätzlich sind beliebige Kombinationen parallel und/oder in Reihe von allen Rohrtypen denkbar. Die Einrichtung kann eine Mehrzahl von Feed-Einlässen und/oder Feed-Auslässen und/oder Produktionsströmen aufweisen. Unter "Feed" kann ein Stoffstrom verstanden werden, welcher der Einrichtung zugeführt wird. Die Rohrleitungen und/oder Rohrleitungssegmente von verschiedenem oder identischem Rohrtyp können parallel und/oder in Reihe mit mehreren Feed-Einlässen und/oder Feed-Auslässen angeordnet sein. Rohrleitungen und/oder Rohrleitungssegmente können in verschiedenen Rohrtypen in Form eines Baukastens vorliegen und abhängig von einem Verwendungszweck ausgewählt und beliebig kombiniert werden. Durch eine Verwendung von Rohrleitungen und/oder Rohrleitungssegmenten von verschiedenen Rohrtypen kann eine genauere Temperaturführung, und/oder eine Anpassung der Reaktion bei schwankendem Feed und/oder eine selektive Ausbeute der Reaktion und/oder eine optimierte Verfahrenstechnik ermöglicht werden. Die Rohrleitungen und/oder Rohrleitungssegmente können identische oder verschiedene Geometrien und/oder Oberflächen und/oder Materialien aufweisen. Die Rohrleitungen und/oder Rohrleitungssegmente können durchverbunden sein und so ein Rohrsystem zur Aufnahme des Fluides bilden. Unter einem "Rohrsystem" kann eine Vorrichtung aus mindestens zwei, insbesondere miteinander verbundenen, Rohrleitungen und/oder Rohrleitungssegmenten verstanden werden. Das Rohrsystem kann zu- und abführende Rohrleitungen aufweisen. Das Rohrsystem kann mindestens einen Einlass zur Aufnahme des Fluides aufweisen. Das Rohrsystem kann mindestens einen Auslass zur Ausgabe des Fluides aufweisen. Unter "durchverbunden" kann verstanden werden, dass die Rohrleitungen und/oder Rohrleitungssegmente miteinander in einer Fluidverbindung stehen. So können die Rohrleitungen und/oder Rohrleitungssegmente derart angeordnet und verbunden sein, dass das Fluid die die Rohrleitungen und/oder Rohrleitungssegmente nacheinander durchströmt. Die Rohrleitungen und/oder Rohrleitungssegmente können parallel zu einander verschaltet sein, derart, dass das Fluid mindestens zwei Rohrleitungen und/oder Rohrleitungssegmente parallel durchströmen kann. Die Rohrleitungen und/oder Rohrleitungssegmente, insbesondere die parallel geschalteten Rohrleitungen und/oder Rohrleitungssegmente, können derart eingerichtet sein unterschiedliche Fluide parallel zu transportieren. Insbesondere können für einen Transport von verschiedenen Fluiden die parallel geschalteten Rohrleitungen und/oder Rohrleitungssegmente, zueinander verschiedene Geometrien und/oder Oberflächen und/oder Materialien aufweisen. Insbesondere für den Transport eines Fluides, können mehrere oder sämtliche der Rohrleitungen und/oder Rohrleitungssegmente parallel konfiguriert sein, so dass das Fluid auf jene parallel konfigurierten Rohrleitungen aufteilbar ist. Auch Kombinationen von einer seriellen und parallelen Schaltung sind denkbar.

Die Rohrleitungen und/oder Rohrleitungssegmente und entsprechend zu- und abführenden Rohrleitungen sind miteinander fluidleitend verbunden, wobei die Rohrleitungen und/oder Rohrleitungssegmente und die zu- und abführenden Rohrleitungen galvanisch voneinander getrennt sind. Unter "galvanisch voneinander getrennt" kann verstanden werden, dass die Rohrleitungen und/oder Rohrleitungssegmente und die zu- und abführenden Rohrleitungen derart voneinander getrennt sind, dass keine elektrische Leitung und/oder eine tolerierbare elektrische Leitung zwischen den Rohrleitungen und/oder Rohrleitungssegmente und den zu- und abführenden Rohrleitungen erfolgt. Die Einrichtung kann mindestens einen Isolator, insbesondere eine Mehrzahl von Isolatoren, aufweisen. Die galvanische Trennung zwischen den jeweiligen Rohrleitungen und/oder Rohrleitungssegmenten und den zu- und abführenden Rohrleitungen kann durch die Isolatoren gewährleistet sein. Die Isolatoren können einen freien Durchfluss des Fluides sicherstellen.

Unter einer "Gleichstromquelle" kann eine Vorrichtung verstanden werden, welche eingerichtet ist einen Gleichstrom bereitzustellen. Unter einer "Gleichspannungsquelle" kann eine Vorrichtung verstanden werden, welche eingerichtet ist eine Gleichspannung bereitzustellen. Die Gleichstromquelle und/oder die Gleichspannungsquelle sind eingerichtet einen Gleichstrom in der jeweiligen Rohrleitung und/oder dem jeweiligen Rohrleitungssegment zu erzeugen. Unter "Gleichstrom" kann ein in Stärke und Richtung im Wesentlichen konstanter elektrischer Strom verstanden werden. Unter einer "Gleichspannung" kann eine im Wesentlichen konstante elektrische Spannung verstanden werden. Unter "im Wesentlichen konstant" kann ein Strom oder eine Spannung verstanden werden, welcher dessen Schwankungen für die beabsichtigte Wirkung unwesentlich ist.

Jeder der Rohrleitungen und/oder für jedes Rohrleitungssegment kann je eine Gleichstromund/oder Gleichspannungsquelle zugeordnet sein, welche mit der jeweiligen Rohrleitung und/oder mit dem jeweiligen Rohrleitungssegment verbunden ist, insbesondere elektrisch über mindestens eine elektrische Verbindung. Zur Verbindung der Gleichstrom- und/oder Gleichspannungsquellen und der jeweiligen Rohrleitung und/oder mit dem jeweiligen Rohrleitungssegment kann die Einrichtung 1 bis N positive Pole und/oder Leiter und 1 bis N negative Pole und/oder Leiter aufweisen, wobei N eine natürliche Zahl größer oder gleich zwei ist.

Die Einrichtung weist eine Mehrzahl von Gleichstrom- und/oder Gleichspannungsquellen auf. Jeder Rohrleitung und/oder jedem Rohrleitungssegment ist je eine Gleichstrom- und/oder Gleichspannungsquelle zugeordnet, welche mit der jeweiligen Rohrleitung und/oder mit dem jeweiligen Rohrleitungssegment verbunden ist, insbesondere elektrisch über mindestens eine elektrische Verbindung. Zur Verbindung der Gleichstrom- und/oder Gleichspannungsquellen und der jeweiligen Rohrleitung und/oder mit dem jeweiligen Rohrleitungssegment kann die Einrichtung 2 bis N positive Pole und/oder Leiter und 2 bis N negative Pole und/oder Leiter aufweisen, wobei N eine natürliche Zahl größer oder gleich drei ist. Die jeweilige Gleichstromund/oder Gleichspannungsquellen kann dazu eingerichtet sein einen elektrischen Strom in der jeweiligen Rohrleitung und/oder in dem jeweiligen Rohrleitungssegment zu erzeugen. Der erzeugte Strom kann die jeweilige Rohrleitung und/oder das jeweilige Rohrleitungssegment durch Joulesche Wärme, die bei Durchgang des elektrischen Stromes durch leitendes Rohrmaterial entsteht, zum Erhitzen des Fluides erwärmen. Unter "Erwärmen der Rohrleitung und/oder des Rohrleitungssegments" kann ein Vorgang verstanden werden, welcher zu einer Änderung einer Temperatur der Rohrleitung und/oder des Rohrleitungssegments führt, insbesondere einen Anstieg der Temperatur der Rohrleitung und/oder des Rohrleitungssegments.

Zusätzlich kann die Einrichtung mindestens einen Heizdraht aufweisen, welcher beispielsweise um die Rohrleitung und/oder das Rohrleitungssegment gewickelt sein kann. Die Gleichstromund/oder Gleichspannungsquelle kann mit dem Heizdraht verbunden sein. Die Gleichstromund/oder Gleichspannungsquelle kann eingerichtet sein einen Strom in dem Heizdraht und so Wärme zu erzeugen. Der Heizdraht kann eingerichtet sein die Rohrleitung und/oder das Rohrleitungssegment zu erwärmen, insbesondere zu erhitzen.

Die Gleichstrom- und/oder Gleichspannungsquellen können entweder geregelt oder ungeregelt sein. Die Gleichstrom- und/oder Gleichspannungsquellen können mit oder ohne Regelungsmöglichkeit mindestens einer elektrischen Ausgangsgröße ausgestaltet sein. Unter einer "Ausgangsgröße" kann ein Strom und/oder ein Spannungswert und/oder ein Strom und/oder ein Spannungssignal verstanden werden. Die Einrichtung kann 2 bis M verschiedene Gleichstromund/oder Gleichspannungsquellen aufweisen, wobei M eine natürliche Zahl größer oder gleich drei ist. Die Gleichstrom- und/oder Gleichspannungsquellen können unabhänqiq voneinander elektrisch regelbar sein. So kann beispielsweise ein verschiedener Strom in den jeweiligen Rohrleitungen erzeugt und verschiedene Temperaturen in den Rohrleitungen erreicht werden. In einem weiteren Aspekt wird im Rahmen der vorliegenden Erfindung ein Verfahren zum Erhitzen eines Fluides vorgeschlagen. In dem Verfahren wird eine erfindungsgemäße Einrichtung verwendet. Das Verfahren umfasst die folgenden Schritte:
- Bereitstellen mindestens einer elektrisch leitfähigen Rohrleitung und/oder mindestens eines elektrisch leitfähigen Rohrleitungssegments zur Aufnahme des Fluides;
- Aufnahme des Fluides in die Rohrleitung und/oder das Rohrleitungssegment;
- Bereitstellen mindestens einer Gleichstrom- und/oder Gleichspannungsquelle, wobei jeder Rohrleitung und/oder jedem Rohrleitungssegment je eine Gleichstrom- und/oder Gleichspannungsquelle zugeordnet ist, welche mit der jeweiligen Rohrleitung und/oder mit dem jeweiligen Rohrleitungssegment verbunden ist,
- Erzeugen eines elektrischen Stroms in der jeweiligen Rohrleitung und/oder in dem jeweiligen Rohrleitungssegment durch die jeweilige Gleichstrom- und/oder Gleichspannungsquelle, welcher die jeweilige Rohrleitung und/oder das jeweilige Rohrleitungssegment durch Joulesche Wärme, welche bei Durchgang des elektrischen Stromes durch leitendes Rohrmaterial entsteht, zum Erhitzen des Fluides erwärmt.

Hinschlich Ausführungsformen und Definitionen kann auf obige Beschreibung der Einheit werden. Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

Das Fluid kann die jeweiligen Rohrleitungen und/oder Rohrleitungssegmente der Einrichtung durchströmen und in diesen erhitzt werden, indem die Rohrleitungen durch einen in diese Rohrleitungen und/oder Rohrleitungssegmente aus den Gleichstrom- und/oder Gleichspannungsquellen eingeprägten Gleichstrom erhitzt werden, so dass in den Rohrleitungen und/oder Rohrleitungssegmenten Joulesche Wärme erzeugt wird, welche auf das Fluid übertragen wird, so dass dieses beim Durchströmen der Rohrleitungen und/oder Rohrleitungssegmente erhitzt wird.

Beispielsweise kann als Fluid ein thermisch zu spaltender Kohlenwasserstoff, insbesondere ein thermisch zu spaltendes Gemisch aus Kohlenwasserstoffen, erhitzt werden.

Beispielsweise kann als Fluid Wasser oder Wasserdampf erhitzt werden, wobei jenes Wasser oder jener Wasserdampf insbesondere auf eine Temperatur im Bereich von 550°C bis 700°C erhitzt wird, und das Fluid zusätzlich einen thermisch zu spaltenden Kohlenwasserstoff, insbesondere ein Gemisch aus thermisch zu spaltenden Kohlenwasserstoffen, aufweist, insbesondere enthält. Das zu erhitzende Fluid kann ein vorgewärmtes Gemisch aus thermisch zu spaltenden Kohlenwasserstoffen und Wasserdampf sein.

Beispielsweise kann als Fluid Verbrennungsluft eines Reformerofens vorgewärmt bzw. aufgeheizt werden, beispielsweise auf eine Temperatur im Bereich von 200 °C bis 800 °C, bevorzugt 400 °C bis 700 °C.

Beispielsweise kann die Rohrleitung als Reaktionsrohr eines Reformerofens ausgebildet sein.

Kurze Beschreibung der Figuren Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. In der Beschreibung und den Figuren sind auch Ausführungsbeispiele angegeben, die nicht unter die Ansprüche fallen. Diese Ausführungsformen sind nicht in den Ansprüchen erfasst. Hierbei handelt es sich nicht um Ausführungsformen der Erfindung, sondern um Aspekte, die das Verständnis der Erfindung erleichtern können.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figuren 1a bis 1c: schematische Darstellungen von Ausführungsbeispielen einer Einrichtung;
- Figur 2: eine schematische Darstellung eines weiteren Ausführungsbeispiels der erfindungsgemäßen Einrichtung;
- Figur 3: eine schematische Darstellung eines weiteren Ausführungsbeispiels der Einrichtung;
- Figur 4a und b: schematische Darstellungen weiterer Ausführungsbeispiele der erfindungsgemäßen Einrichtung;
- Figuren 5a bis 5c: schematische Darstellungen von Ausführungsbeispielen einer Einrichtung;
- Figur 6: eine schematische Darstellung eines weiteren Ausführungsbeispiels der erfindungsgemäßen Einrichtung;
- Figur 7: eine schematische Darstellung eines weiteren Ausführungsbeispiels der Einrichtung;
- Figuren 8a und 8b: schematische Darstellungen weiterer Ausführungsbeispiele der erfindungsgemäßen Einrichtung;
- Figuren 9Ai bis Cvi: schematische Darstellung von Rohrtypen; und
- Figuren 10a bis y: einen Baukasten mit Rohrtypen und erfindungsgemäße Ausführungsbeispiele von Kombinationen von Rohrleitungen und/oder Rohrleitungssegmenten.

### Ausführungsbeispiele

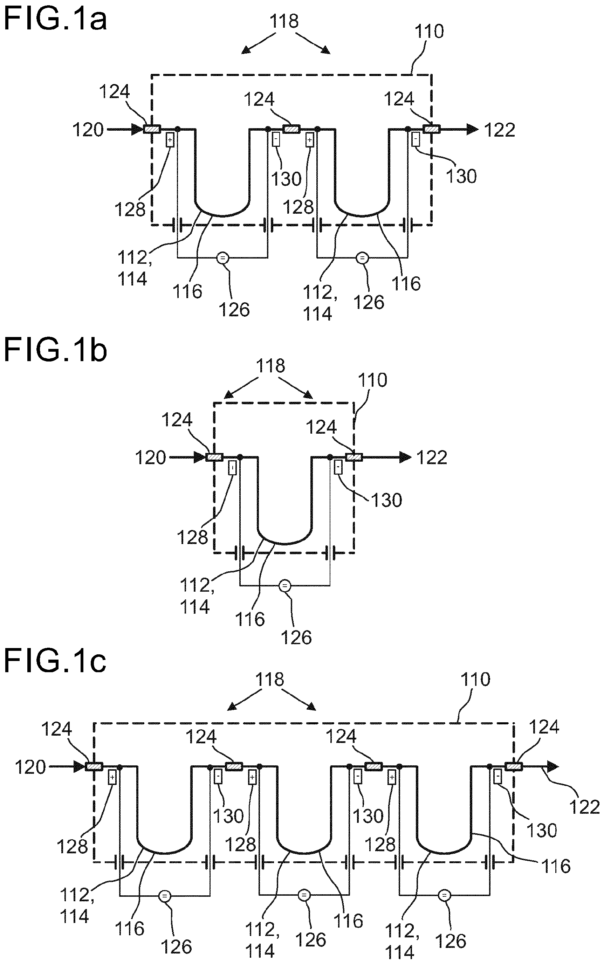

Figuren 1a und 1c zeigen jeweils eine schematische Darstellung eines Ausführungsbeispiels einer erfindungsgemäßen Einrichtung 110 zum Erhitzen eines Fluides. Die Einrichtung 110 umfasst mindestens eine elektrisch leitfähige Rohrleitung 112 und/oder mindestens ein elektrisch leitfähiges Rohrleitungssegment 114 zur Aufnahme des Fluides. Das Fluid kann ein gasförmiges und/oder flüssiges Medium sein. Das Fluid kann beispielsweise ausgewählt sein aus der Gruppe bestehend aus: Wasser, Wasserdampf, einer Verbrennungsluft, einem Kohlenwasserstoffgemisch, einem zu spaltenden Kohlenwasserstoff. Beispielsweise kann das Fluid ein thermisch zu spaltender Kohlenwasserstoff, insbesondere ein thermisch zu spaltendes Gemisch aus Kohlenwasserstoffen, sein. Beispielsweise kann das Fluid Wasser oder Wasserdampf sein und zusätzlich einen thermisch zu spaltenden Kohlenwasserstoff, insbesondere ein Gemisch aus thermisch zu spaltenden Kohlenwasserstoffen, aufweisen. Das Fluid kann beispielsweise ein vorgewärmtes Gemisch aus thermisch zu spaltenden Kohlenwasserstoffen und Wasserdampf sein. Auch andere Fluide sind denkbar. Die Einrichtung 110 kann eingerichtet sein das Fluid zu erwärmen, insbesondere einen Anstieg der Temperatur des Fluides zu bewirken. Das Fluid kann beispielsweise durch das Erhitzen bis zu einem vorgegebenen oder vorbestimmten Temperaturwert geheizt werden. Beispielsweise kann das Fluid auf eine Temperatur im Bereich von 400°C bis 1200°C erhitzt werden.

Beispielsweise kann die Einrichtung 110 kann Teil einer Anlage sein. Beispielsweise kann die Anlage ausgewählt sein aus der Gruppe bestehend aus: einem Steamcracker, einem Steamreformer, einer Vorrichtung zur Alkandehydrierung. Beispielsweise kann die Einrichtung 110 eingerichtet sein mindestens ein Verfahren durchzuführen ausgewählt aus der Gruppe bestehend aus: Steamcracking, Steamreforming, Alkandehydrierung. Die Einrichtung 110 kann beispielsweise Teil eines Steamcrackers sein. Der Steamcracker kann eingerichtet sein das Fluid auf eine Temperatur im Bereich von 550°C bis 1100°C zu erwärmen. Beispielsweise kann die Einrichtung 110 Teil eines Reformerofens sein. Beispielsweise kann das Fluid eine Verbrennungsluft eines Reformerofens sein, welche vorgewärmt bzw. aufgeheizt wird, beispielsweise auf eine Temperatur im Bereich von 200 °C bis 800 °C, bevorzugt von 400 °C bis 700 °C. Beispielsweise kann die Einrichtung 110 Teil einer Vorrichtung zur Alkandehydrierung sein. Die Vorrichtung zur Alkandehydrierung kann eingerichtet sein das Fluid auf eine Temperatur im Bereich von 400°C bis 700°C zu erwärmen. Auch andere Temperaturen und Temperaturbereiche sind jedoch denkbar.

Die Rohrleitung 112 und/oder das Rohrleitungssegment 114 kann eingerichtet sein das Fluid aufzunehmen und zu transportieren. Die Rohrleitung 112 und/oder das Rohrleitungssegment 114 kann mindestens einen Schenkel 116 oder eine Windung umfassen. Die Rohrleitung 112 kann mindestens ein symmetrisches und/oder mindestens ein unsymmetrisches Rohr aufweisen. Figur 1c zeigt eine Ausführungsform mit drei symmetrischen Rohrleitung 112 und/oder Rohrleitungssegmenten 114. Geometrie und/oder Oberflächen und/oder Material der Rohrleitung 112 kann anhängig von einem zu transportierenden Fluid sein. Die Rohrleitung 112 und/oder das Rohrleitungssegment 114 kann eingerichtet sein elektrischen Strom zu leiten. Die Rohrleitung 112 kann als ein Reaktionsrohr eines Reformerofens ausgebildet sein.

Figur 1b zeigt eine Einrichtung, in welchem die Einrichtung eine Rohrleitung 112 aufweist. Erfindungsgemäß weist die Einrichtung 110 eine Mehrzahl an Rohrleitungen 112 und/oder Rohrleitungssegmenten 114 auf, beispielsweise wie in Figur 1a gezeigt zwei oder wie in Figur 1c gezeigt drei. Die Einrichtung 110 kann L Rohrleitungen 112 und/oder Rohrleitungssegmente 114 aufweisen, wobei L eine natürliche Zahl größer oder gleich zwei ist. Beispielsweise kann die Einrichtung 110 mindestens zwei, drei, vier, fünf oder auch mehr Rohrleitungen 112 und/oder Rohrleitungssegmente
114 aufweisen. Die Einrichtung 110 kann beispielsweise bis zu hundert Rohrleitungen 112 und/oder Rohrleitungssegmente 114 aufweisen. Die Rohrleitungen 112 und/oder Rohrleitungssegmente 114 können identisch oder verschieden ausgestaltet sein. Die Rohrleitungen 112 und/oder Rohrleitungssegmente 114 sind durchverbunden und können so ein Rohrsystem 118 zur Aufnahme des Fluides bilden. Das Rohrsystem 118 weist zu- und abführende Rohrleitungen 112 auf. Das Rohrsystem118 kann mindestens einen Einlass 120 zur Aufnahme des Fluides aufweisen. Das Rohrsystem 118 kann mindestens einen Auslass 122 zur Ausgabe des Fluides aufweisen. Figur 1 zeigt eine Ausführungsform, bei welcher die Rohrleitungen 112 und/oder Rohrleitungssegmente 114 derart angeordnet und verbunden sind, dass das Fluid die die Rohrleitungen 112 und/oder Rohrleitungssegmente 114 nacheinander durchströmt.

Die Rohrleitungen 112 und/oder Rohrleitungssegmente 114 und entsprechend zu- und abführenden Rohrleitungen sind miteinander fluidleitend verbunden, wobei die Rohrleitungen 112 und/oder Rohrleitungssegmente 114 und die zu- und abführenden Rohrleitungen galvanisch voneinander getrennt sind. Die Einrichtung 110 kann mindestens eine galvanische Trennung, insbesondere mindestens einen Isolator 124, insbesondere eine Mehrzahl von Isolatoren 124, aufweisen. Die galvanische Trennung zwischen den jeweiligen Rohrleitungen 112 und/oder Rohrleitungssegmenten 114 und den zu- und abführenden Rohrleitungen kann durch die Isolatoren 124 gewährleistet sein. Die Isolatoren 124 können einen freien Durchfluss des Fluides sicherstellen.

Die Einrichtung 110 umfasst mindestens eine Gleichstrom- und/oder Gleichspannungsquelle 126. Die Einrichtung 110 kann eine Mehrzahl von Gleichstrom- und/oder Gleichspannungsquellen 126 aufweisen, beispielsweise wie in Figur 1c exemplarisch gezeigt drei. Die Einrichtung 110 kann 2 bis M verschiedene Gleichstrom- und/oder Gleichspannungsquellen 126 aufweisen, wobei M eine natürliche Zahl größer oder gleich drei ist. Die Gleichstrom- und/oder Gleichspannungsquelle 126 ist mit der jeweiligen Rohrleitung 112 und/oder mit dem jeweiligen Rohrleitungssegment 114 verbunden, insbesondere elektrisch über mindestens eine elektrische Verbindung. Zur Verbindung der Gleichstrom- und/oder Gleichspannungsquellen 126 und der jeweiligen Rohrleitung 112 und/oder mit dem jeweiligen Rohrleitungssegment 114 kann die Einrichtung 110 2 bis N positive Pole und/oder Leiter 128 und 2 bis N negative Pole und/oder Leiter 130 aufweisen, wobei N eine natürliche Zahl größer oder gleich drei ist. Die Gleichstrom- und/oder Gleichspannungsquellen 126 können entweder geregelt oder ungeregelt sein. Die Gleichstrom- und/oder Gleichspannungsquellen 126 können mit oder ohne Regelungsmöglichkeit mindestens einer elektrischen Ausgangsgröße ausgestaltet sein. Die Gleichstrom- und/oder Gleichspannungsquellen 126 können unabhängig voneinander elektrisch regelbar sein. So kann beispielsweise ein verschiedener Strom in den jeweiligen Rohrleitungen 112 erzeugt und verschiedene Temperaturen in den Rohrleitungen 112 erreicht werden

Die jeweilige Gleichstrom- und/oder Gleichspannungsquelle 126 kann dazu eingerichtet sein einen elektrischen Strom in der jeweiligen Rohrleitung 112 und/oder in dem jeweiligen Rohrleitungssegment 114 zu erzeugen. Der erzeugte Strom kann die jeweilige Rohrleitung 112 und/oder das jeweilige Rohrleitungssegment 114 durch Joulesche Wärme, die bei Durchgang des elektrischen Stromes durch leitendes Rohrmaterial entsteht, zum Erhitzen des Fluides erwärmen.

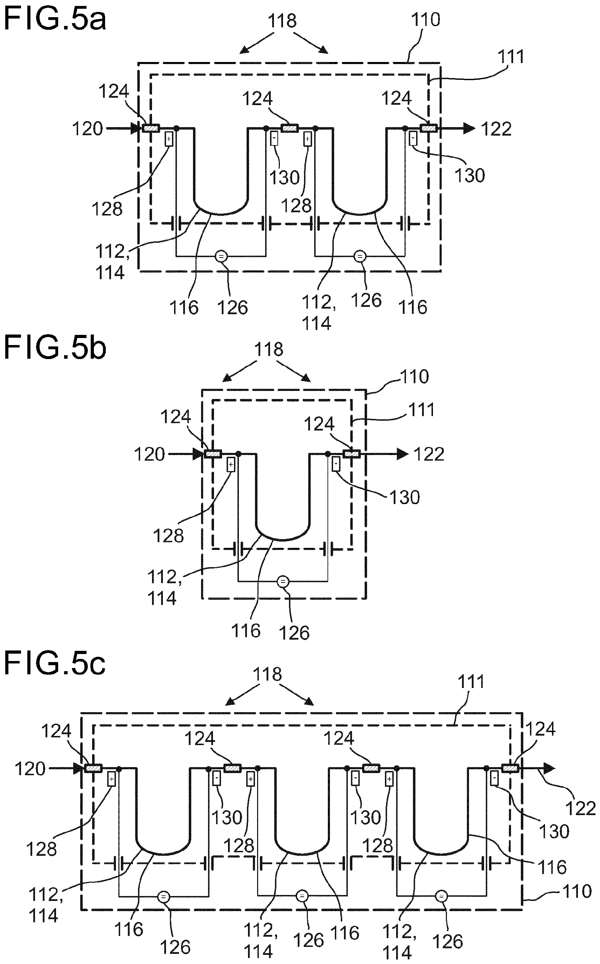

Figuren 5a bis 5c zeigen jeweils eine schematische Darstellung eines Ausführungsbeispiels einer Einrichtung 110 zum Erhitzen eines Fluides, wobei in den Ausführungsbeispielen der Figuren 5a bis 5c weiterhin jeweils ein Reaktivraum 111 der Einrichtung 110 dargestellt ist. Hinsichtlich der weiteren Elemente der Figur 5a kann auf die Beschreibung der Figur 1a verwiesen werden. Hinsichtlich der weiteren Elemente der Figur 5b kann auf die Beschreibung der Figur 1b verwiesen werden. Hinsichtlich der weiteren Elemente der Figur 5c kann auf die Beschreibung der Figur 1c verwiesen werden.

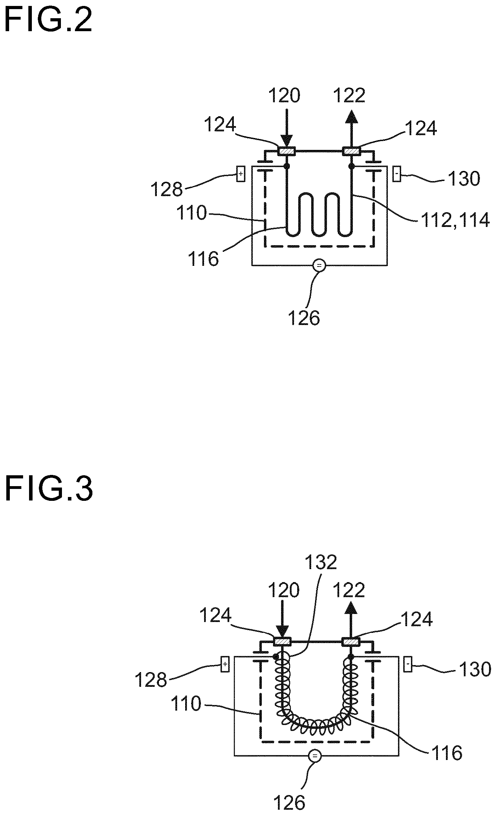

Figur 2 zeigt eine weitere Ausführungsform der erfindungsgemäßen Einrichtung 110. Hinsichtlich der Ausgestaltung der Einrichtung wird auf die Beschreibung zu Figur 1 verwiesen mit folgenden Besonderheiten. In dieser Ausführungsform weist die Einrichtung 110 Rohrleitungssegmente 114 mit drei Schenkeln 116 oder Windungen auf, welche fluidisch verbunden sind. Die Einrichtung 110 weist den Einlass 120 und den Auslass 122 auf. Das Fluid kann die Rohrleitungssegmente 114 von dem Einlass 120 zu dem Auslass 122 seriell durchströmen. Zur galvanischen Trennung kann die Einrichtung 110 die Isolatoren 124 aufweisen, beispielsweise wie in Figur 2 gezeigt zwei Isolatoren 124. In dieser Ausführungsform weist die Einrichtung 110 eine Gleichstrom- und/oder Gleichspannungsquelle 126 auf. Zur Verbindung der Gleichstrom- und/oder Gleichspannungsquelle 126 und mit dem jeweiligen Rohrleitungssegment 114 kann die Einrichtung 110 einen positiven Pol und/oder Leiter 128 und einen negativen Pol und/oder Leiter 130 aufweisen.

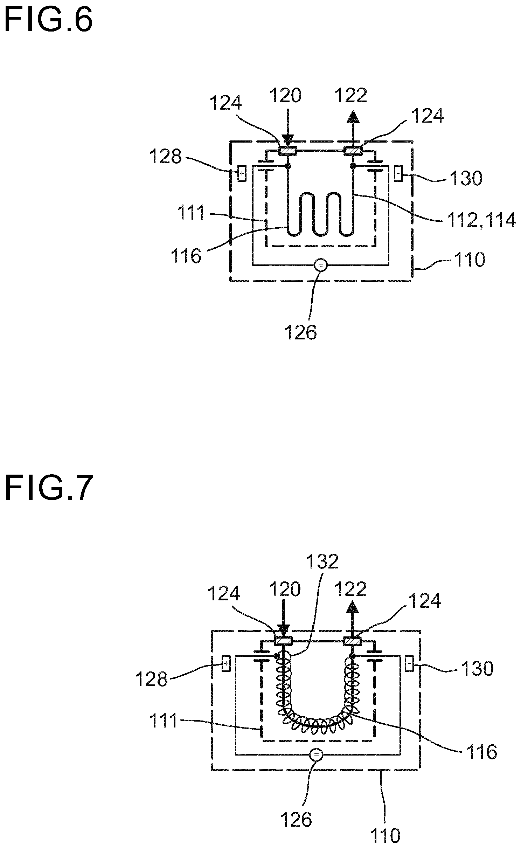

Figur 6 zeigt eine schematische Darstellung eines Ausführungsbeispiels einer Einrichtung 110 zum Erhitzen eines Fluides, wobei in dem Ausführungsbeispiel der Figur 6 weiterhin jeweils ein Reaktivraum 111 der Einrichtung 110 dargestellt ist. Hinsichtlich der weiteren Elemente der Figur 6 kann auf die Beschreibung der Figur 2 verwiesen werden.

Figur 3 zeigt eine weitere Ausführungsform einer Einrichtung 110 gemäß der vorliegenden Beschreibung. Hinsichtlich der Ausgestaltung der Einrichtung wird auf die Beschreibung zu Figur 1 verwiesen mit folgenden Besonderheiten. In dieser Ausführungsform weist die Einrichtung 110 eine Rohrleitung 112 und/oder Rohrleitungssegmente 114 mit einem Schenkel 116 oder einer Windung auf. Zur galvanischen Trennung kann die Einrichtung 110 die Isolatoren 124 aufweisen, beispielsweise wie in Figur 3 gezeigt zwei Isolatoren 124. In dieser Ausführungsform weist die Einrichtung 110 eine Gleichstrom- und/oder Gleichspannungsquelle 126 auf. Weiter kann die Einrichtung 110 mindestens einen Heizdraht aufweisen 132, welcher beispielsweise um die Rohrleitung und/oder das Rohrleitungssegment gewickelt sein kann. Die Gleichstrom- und/oder Gleichspannungsquelle 126 kann mit dem Heizdraht 132 verbunden sein. Die Gleichstromund/oder Gleichspannungsquelle 126 kann eingerichtet sein, einen Strom in dem Heizdraht 132 und so Wärme zu erzeugen. Der Heizdraht 132 kann eingerichtet sein die Rohrleitung 112 und/oder das Rohrleitungssegment 114 zu erwärmen.

Figur 7 zeigt eine schematische Darstellung eines Ausführungsbeispiels einer Einrichtung 110 zum Erhitzen eines Fluides gemäß der vorliegenden Beschreibung, wobei in dem Ausführungsbeispiel der Figur 7 weiterhin jeweils ein Reaktivraum 111 der Einrichtung 110 dargestellt ist. Hinsichtlich der weiteren Elemente der Figur 7 kann auf die Beschreibung der Figur 3 verwiesen werden.

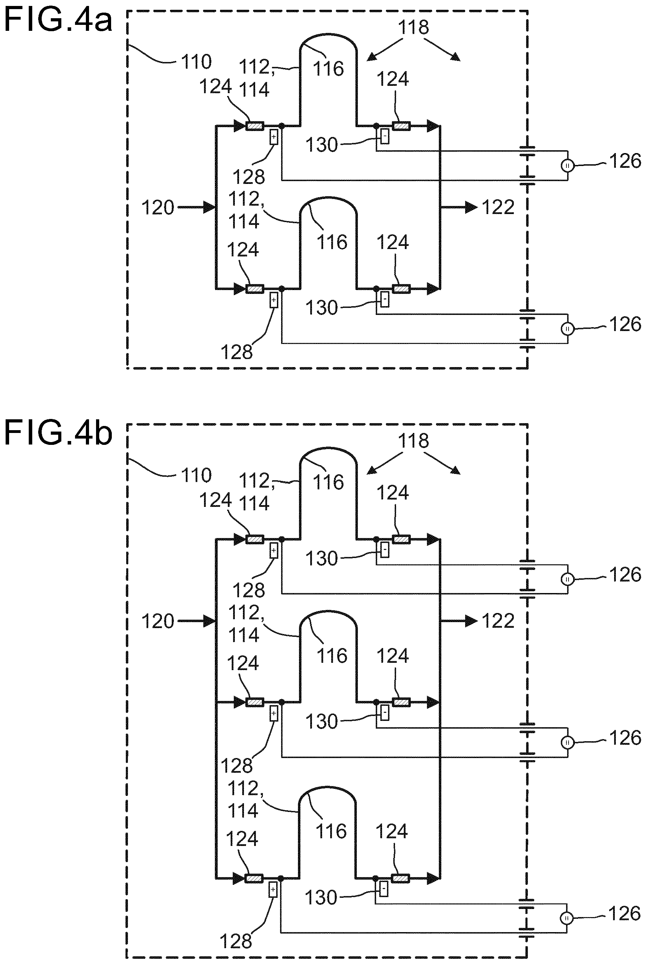

In den Ausführungsbeispielen der Figuren 1a und 1c sind die Rohrleitungen 112 seriell angeordnet. Figuren 4a und 4b zeigen Ausführungsformen mit parallel geschalteten Rohrleitungen 112 und/oder Rohrleitungssegmente 114, in Figur 4a mit zwei parallelen Rohrleitung 112 und/oder Rohrleitungssegmenten 114 und in Figur 4b mit 3 parallelen Rohrleitungen 112 und/oder Rohrleitungssegmenten 114. Auch andere Anzahlen von parallelen Rohrleitungen 112 und/oder Rohrleitungssegmenten 114 sind denkbar. In den Figuren 4a und 4b weist die Einrichtung 110 einen Einlass 120 und einen Auslass 122 auf. Die Rohrleitungen 112 und/oder Rohrleitungssegmente 114 können derart zueinander verschaltet sein, dass das Fluid mindestens zwei Rohrleitungen 112 und/oder Rohrleitungssegmente 114 parallel durchströmen kann. Die parallel geschalteten Rohrleitungen 112 und/oder Rohrleitungssegmente 114 können zueinander verschiedene Geometrien und/oder Oberflächen und/oder Materialien aufweisen. Beispielsweise können die parallel geschalteten Rohrleitungen 112 und/oder Rohrleitungssegmente 114 verschiedenen Anzahlen von Schenkeln 116 oder Windungen aufweisen.

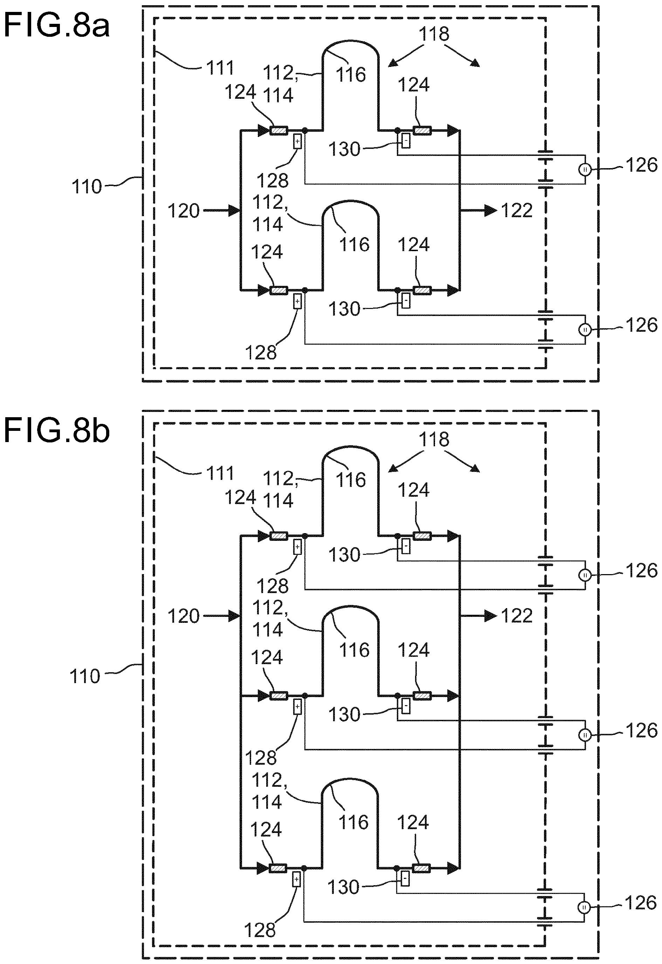

Figuren 8a und 8b zeigen eine schematische Darstellung eines Ausführungsbeispiels einer erfindungsgemäßen Einrichtung 110 zum Erhitzen eines Fluides, wobei in den Ausführungsbeispielen der Figuren 8a und 8b weiterhin jeweils ein Reaktivraum 111 der Einrichtung 110 dargestellt ist. Hinsichtlich der weiteren Elemente der Figur 8a kann auf die Beschreibung der Figur 4a verwiesen werden. Hinsichtlich der weiteren Elemente der Figur 8b kann auf die Beschreibung der Figur 4b verwiesen werden.

Die Einrichtung 110 kann symmetrische und/oder unsymmetrische Rohre und/oder Kombinationen davon aufweisen. Bei einer rein symmetrischen Ausgestaltung kann die Einrichtung 110 Rohrleitungen 112 und/oder Rohrleitungssegmente 114 von einem identischen Rohrtyp aufweisen. Die Einrichtung 110 kann eine beliebige Kombination von Rohrtypen aufweisen, welche beispielsweise zudem beliebig parallel oder in Reihe verschaltet sein können. Der Rohrtyp kann mindestens durch ein Merkmal charakterisiert werden ausgewählt aus der Gruppe bestehend aus: einer horizontalen Ausgestaltung der Rohrleitung 112 und/oder des Rohrleitungssegments 114; einer vertikalen Ausgestaltung der Rohrleitung 112 und/oder des Rohrleitungssegments 114; einer Länge im Eintritt (L1) und/oder Austritt (L2) und/oder Übergang (L3); einem Durchmesser im Eintritt (d1) und Austritt (d2) und/oder Übergang (d3); Anzahl n von Pässen; Länge pro Pass; Durchmesser pro Pass; Geometrie; Oberfläche; und Material. Alternativ oder zusätzlich kann der Rohrtyp ausgewählt sein aus mindestens einer Rohrleitung 112 und/oder mindestens eines Rohrleitungssegments 114 mit oder ohne galvanische Trennung und/oder Erdung 125. Die galvanische Trennung kann beispielsweise unter Verwendung eines Isolators 124 ausgestaltet sein. Beispielsweise kann eine galvanische Trennung am Einlass 120 der Rohrleitung 112 und/oder des Rohrsegments 114 und eine galvanische Trennung am Auslass 122 der Rohrleitung 112 und/oder des Rohrsegments 114 vorgesehen sein. Beispielsweise kann eine galvanische Trennung am Einlass 120 der Rohrleitung 112 und/oder des Rohrsegments 114 und eine Erdung 125 am Auslass 122 der Rohrleitung 112 und/oder des Rohrsegments 114 vorgesehen sein. Beispielsweise kann eine galvanische Trennung nur am Einlass 120 der Rohrleitung 112 und/oder des Rohrsegments 114 vorgesehen sein. Beispielsweise kann eine Erdung 125 nur am Einlass 120 der Rohrleitung 112 und/oder des Rohrsegments 114 vorgesehen sein. Beispielsweise kann die Rohrleitung 112 und/oder des Rohrsegments 114 ohne Erdung 125 am Einlass 120 und Auslass 122 und/oder ohne galvanische Trennung am Einlass 120 und Auslass 122 vorgesehen sein. Alternativ oder zusätzlich kann der Rohrtyp durch eine Flussrichtung des Fluids charakterisiert sein. Das Fluid kann grundsätzlich in zwei Flussrichtungen, als erste und als zweite Flussrichtung bezeichnet, fließen. Die erste und die zweite Flussrichtung können entgegengesetzt sein. Alternativ oder zusätzlich kann der Rohrtyp durch eine Beaufschlagung der Rohrleitung 112 und/oder des Rohrsegmentes 114 mit Gleichstrom charakterisiert sein. Beispielsweise kann eine Einspeisung des Gleichstroms an einer beliebigen Stelle der Rohrleitung 112 und/oder des Rohrsegments 114 zwischen mindestens zwei negativen Polen und/oder Leitern erfolgen. Beispielsweise kann die Einspeisung in einer Mitte zwischen zwei negativen Polen erfolgen, sodass ein Widerstand der Rohrleitung 112 und/oder des Rohrsegments 114 aufgeteilt wird in zwei Teilwiderstände R1 und R2. Eine Hälfte des Gleichstroms kann zu einem ersten negativen Pol und eine zweite Hälfte zu einem zweiten negativen Pol fließen. Die Einspeisung kann auch an beliebiger Stelle zwischen den negativen Polen/Leitern erfolgen, so dass sich unterschiedliche Teilwiderstände ergeben. Beispielsweise kann eine Einspeisung des Gleichstroms über einen negativen Pol und/oder Leiter und einen positiven Pol und/oder Leiter an der Rohrleitung 112 und/oder dem Rohrsegment 114 erfolgen. Beispielsweise kann der Gleichstrom von dem positiven zu dem negativen Pol fliesen und die Rohrleitung 112 und/oder das Rohrsegment 114 als Gesamtwiderstand R betrachtet werden. Eine beliebige Kombination der Rohrtypen ist dabei möglich.

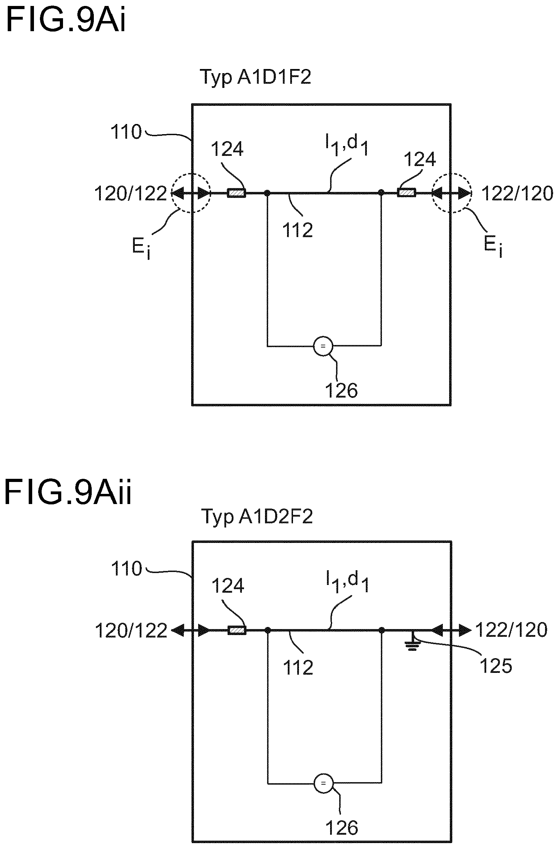

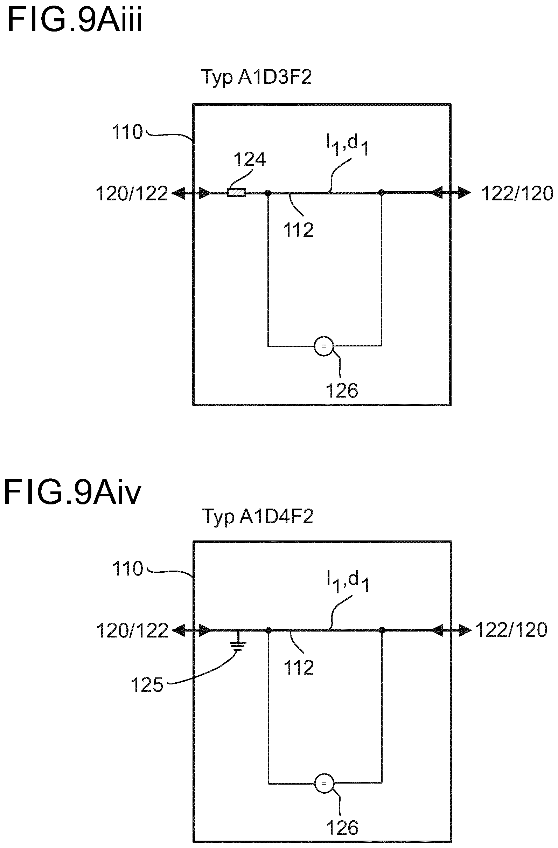

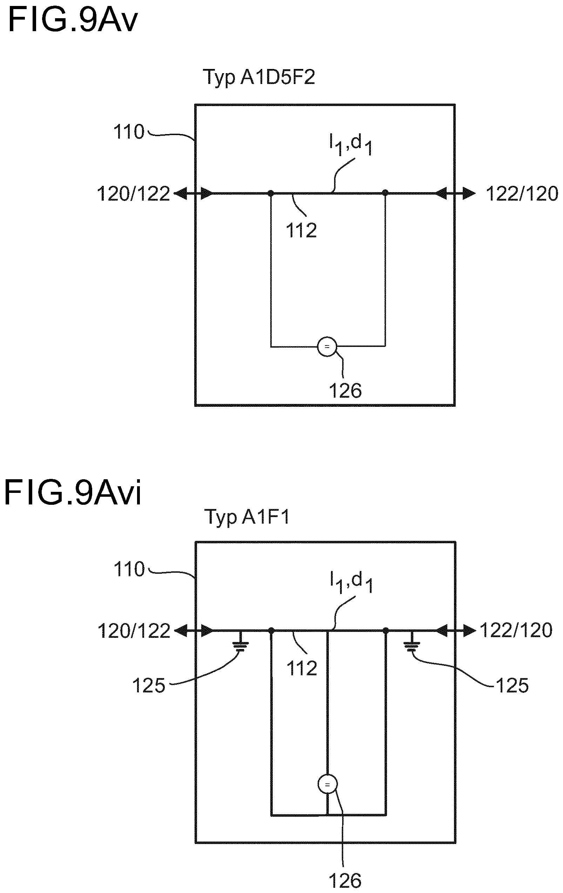

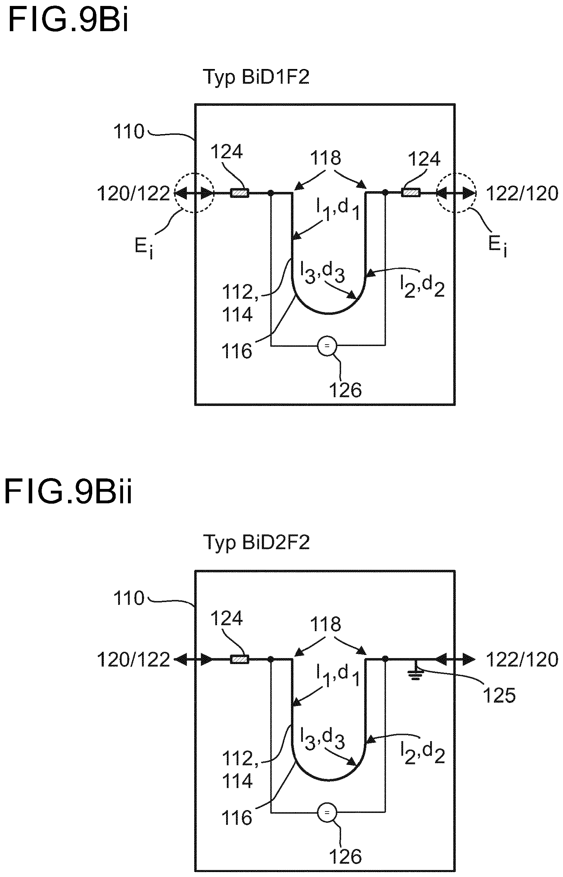

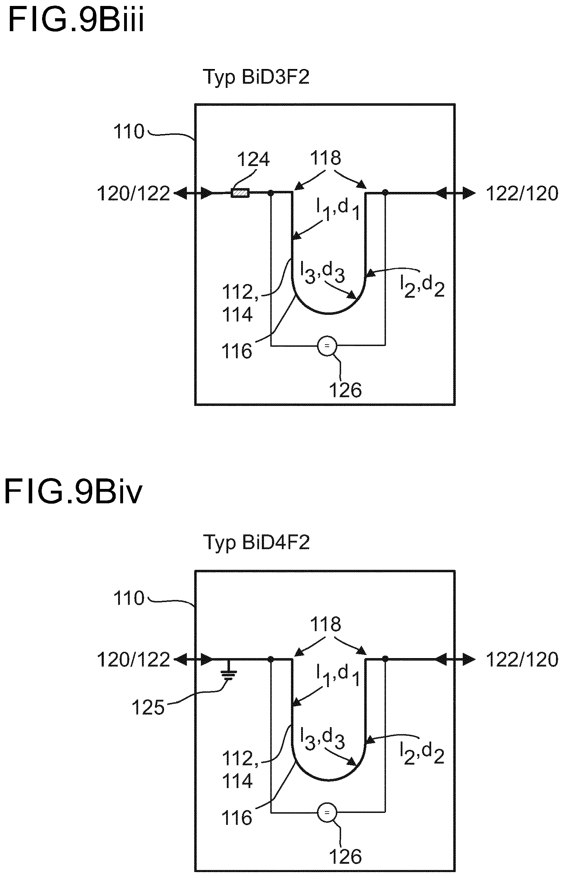

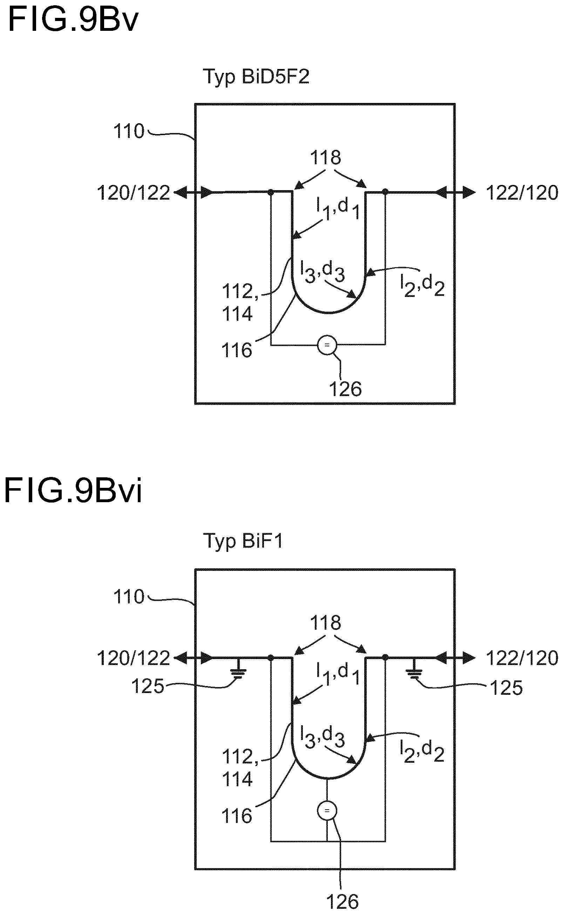

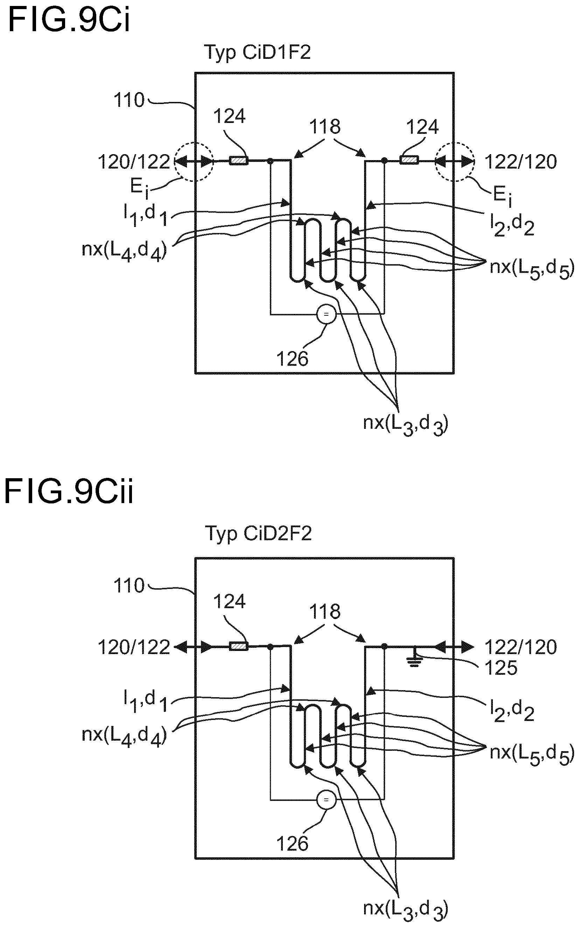

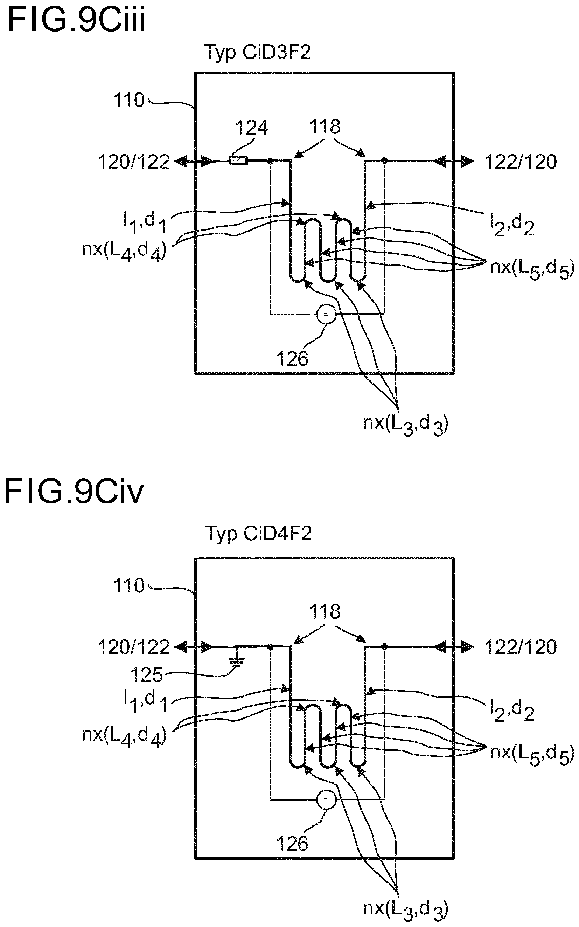

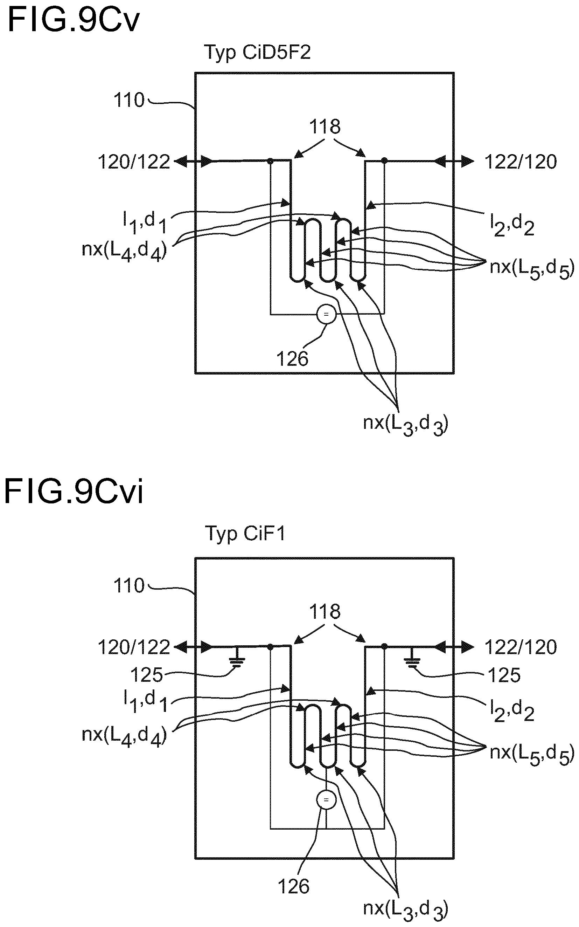

Figuren 9Ai bis Civ zeigen exemplarisch mögliche Ausführungsformen von Rohrtypen in schematischer Darstellung gemäß der vorliegenden Beschreibung. Dabei ist in den Figuren 9A1 bis Civ jeweils der Rohrtyp angegeben. Dieser kann in die folgenden Kategorien eingeteilt werden, wobei alle denkbaren Kombination der Kategorien möglich sind:
- Kategorie A gibt einen Verlauf der Rohrleitung 112 und/oder eines Rohrleitungssegments 114 an, wobei A1 einen Rohrtyp mit horizontalem Verlauf und A2 einen Rohrtyp mit vertikalem, also einem zu dem horizontalen Verlauf senkrechten Verlauf, kennzeichnet.
- Kategorie B gibt ein Verhältnis von Längen im Eintritt (L1) und/oder Austritt (L2) und/oder Durchmesser im Eintritt (d1) und/oder Austritt (d2) und/oder Übergang (d3) an, wobei in dem Baukasten 138 sechs verschiedene Kombinationsmöglichkeiten aufgeführt sind.
- Kategorie C gibt Verhältnisse von Längen im Eintritt (L1) und/oder Austritt (L2) und Längen von Pässen an. Hier sind sämtliche Kommutationen denkbar, welche vorliegend mit Ci gekennzeichnet werden.
- Kategorie D gibt an, ob das die mindestens eine Rohrleitung 112 und/oder das mindestens eine Rohrleitungssegments 114 mit oder ohne galvanische Trennung und/oder Erdung 125 ausgestaltet ist. Die galvanische Trennung kann beispielsweise unter Verwendung eines Isolators 124 ausgestaltet sein. D1 bezeichnet einen Rohrtyp, bei welchem eine galvanische Trennung am Einlass 120 der Rohrleitung 112 und/oder des Rohrsegments 114 und eine galvanische Trennung am Auslass 122 der Rohrleitung 112 und/oder des Rohrsegments 114 vorgesehen ist. D2 bezeichnet einen Rohrtyp, bei welchem eine galvanische Trennung am Einlass 120 der Rohrleitung 112 und/oder des Rohrsegments 114 und eine Erdung 125 am Auslass 122 der Rohrleitung 112 und/oder des Rohrsegments 114 vorgesehen ist. D3 bezeichnet einen Rohrtyp, bei welchem eine galvanische Trennung nur am Einlass 120 der Rohrleitung 112 und/oder des Rohrsegments 114 vorgesehen ist. D4 bezeichnet einen Rohrtyp, bei welchem eine Erdung 125 nur am Einlass 120 der Rohrleitung 112 und/oder des Rohrsegments 114 vorgesehen ist. D5 bezeichnet einen Rohrtyp, bei welchem die Rohrleitung 112 und/oder das Rohrsegments 114 ohne Erdung 125 am Einlass 120 und Auslass 122 und/oder ohne galvanische Trennung am Einlass 120 und Auslass 122 vorgesehen ist.
- Kategorie E gibt eine Flussrichtung des Fluids an. Das Fluid kann grundsätzlich in zwei Flussrichtungen fließen. Ein Rohrtyp, bei welchem das Fluid in eine erste Flussrichtung fließt wird als Rohrtyp E1 bezeichnet, und ein Rohrtyp, bei welchem das Fluid in eine zweite Flussrichtung fließt wird als Rohrtyp E2 bezeichnet. Die erste und die zweite Flussrichtung können entgegengesetzt sein.
- Kategorie F kennzeichnet eine Beaufschlagung der Rohrleitung 112 und/oder des Rohrsegmentes 114 mit Gleichstrom. F1 bezeichnet einen Rohrtyp, bei welchem eine Einspeisung des Gleichstroms an einer beliebigen Stelle der Rohrleitung 112 und/oder des Rohrsegments 114 zwischen mindestens zwei negativen Polen und/oder Leitern erfolgt. Beispielsweise kann die Einspeisung in einer Mitte zwischen zwei negativen Polen erfolgen, sodass ein Widerstand der Rohrleitung 112 und/oder des Rohrsegments 114 aufgeteilt wird in zwei Teilwiderstände R1 und R2. Eine Hälfte des Gleichstroms kann zu einem ersten negativen Pol und eine zweite Hälfte zu einem zweiten negativen Pol fließen. Die Einspeisung kann auch an beliebiger Stelle zwischen den negativen Polen/Leitern erfolgen, so dass sich unterschiedliche Teilwiderstände ergeben können. F2 bezeichnet einen Rohrtyp, bei welchem eine Einspeisung, bzw. der Anschluss, des Gleichstroms über einen negativen Pol und/oder Leiter und einen positiven Pol und/oder Leiter an der Rohrleitung 112 und/oder dem Rohrsegment 114 erfolgt. Beispielsweise kann der Gleichstrom von dem positiven zu dem negativen Pol fliesen und die Rohrleitung 112 und/oder das Rohrsegment 114 als Gesamtwiderstand R betrachtet werden. Eine beliebige Kombination der Rohrtypen ist dabei möglich.

In Figur 9Ai ist eine Rohrleitung 112 und/oder ein Rohrleitungssegment 114 vom Rohrtyp A1D1F2 gezeigt. Die Rohrleitung 112 und/oder das Rohrleitungssegment 114 weist einen horizontalen Verlauf aufweist. Die Einrichtung 110 weist in dieser Ausführungsform zwei Isolatoren 124 auf, welche nach dem Einlass 120 und vor dem Auslass 122 angeordnet sind. Hinsichtlich der weiteren Elemente der Figur 9Ai kann auf die Beschreibung der Figur 5b verwiesen werden. In Figur 9Ai sind mögliche Flussrichtungen Ei exemplarisch mit einem Doppelpfeil an Einlass 120 und Auslass 122 dargestellt. In den weiteren Figuren 9 werden Einlass 120 und Auslass 122 gemeinsam bezeichnet. Das Ausführungsbeispiel in Figur 9Aii zeigt einen Rohrtyp A1D2F2 und unterscheidet sich von Figur 9Ai darin, dass die Einrichtung 110 nur einen Isolator 124 aufweist, wobei statt des zweiten Isolators eine Erdung 125 vorgesehen ist. Das Ausführungsbeispiel in Figur 9Aiii zeigt einen Rohrtyp A1D3F2 und unterscheidet sich von Figur 9Aii darin, dass keine Erdung 125 vorgesehen ist. In Figur 9Aiv, Rohrtyp A1D4F2, weist die Einrichtung 110, im Vergleich zu Figur 9Aiii, anstatt des Isolators nur eine Erdung 125 auf. Auch Ausführungsformen ohne Isolatoren 124 oder Erdungen 125 sind möglich, wie in Figur 9Av, Rohrtyp A1D5F2, dargestellt. Figuren 9Ai bis 9Avi zeigen Rohrtypen, bei welchen eine Einspeisung des Gleichstroms über einen negativen Pol und/oder Leiter und einen positiven Pol und/oder Leiter an der Rohrleitung 112 und/oder dem Rohrsegment 114 erfolgt. Figur 9Avi zeigt einen Rohrtyp A1F1, bei welchem eine Einspeisung des Gleichstroms an einer beliebigen Stelle der Rohrleitung 112 und/oder des Rohrsegments 114 zwischen mindestens zwei negativen Polen und/oder Leitern erfolgt.

In Figur 9Bi, Rohrtyp BiD1F2, sind Längen im Eintritt (L1), Austritt (L2) und Übergang (L3) sowie Durchmesser im Eintritt (d1), Austritt (d2) und Übergang (d3) dargestellt. Die Einrichtung 110 kann Rohrleitungen 112 und/oder Rohrleitungssegmente 114 mit verschiedenen Längen im Eintritt (L1) und/oder Austritt (L2) und/oder Übergang (L3) und/oder Durchmesser im Eintritt (d1) und/oder Austritt (d2) und/oder Übergang (d3) aufweisen. Hinsichtlich der weiteren Elemente der Figur 9Bi kann auf die Beschreibung der Figur 5b verwiesen werden. Das Ausführungsbeispiel in Figur 9Bii zeigt einen Rohrtyp BiD2F2 und unterscheidet sich von Figur 9Bi darin, dass die Einrichtung 110 nur einen Isolator 124 aufweist, wobei statt des zweiten Isolators eine Erdung 125 vorgesehen ist. Das Ausführungsbeispiel in Figur 9Biii zeigt einen Rohrtyp BiD3F2 und unterscheidet sich von Figur 9Bii darin, dass keine Erdung 125 vorgesehen ist. In Figur 9Biv, Rohrtyp BiD4F2, weist die Einrichtung 110, im Vergleich zu Figur 9Biii, anstatt des Isolators nur eine Erdung 125 auf. Auch Ausführungsformen ohne Isolatoren 124 oder Erdungen 125 sind möglich, wie in Figur 9Bv, Rohrtyp BiD5F2, dargestellt. Figuren 9Bi bis 9Bvi zeigen Rohrtypen, bei welchen eine Einspeisung des Gleichstroms über einen negativen Pol und/oder Leiter und einen positiven Pol und/oder Leiter an der Rohrleitung 112 und/oder dem Rohrsegment 114 erfolgt. Figur 9Bvi zeigt einen Rohrtyp BiF1, bei welchem eine Einspeisung des Gleichstroms an einer beliebigen Stelle der Rohrleitung 112 und/oder des Rohrsegments 114 zwischen mindestens zwei negativen Polen und/oder Leitern erfolgt.

Figur 9Ci, Rohrtyp CiD1F2, zeigt ein Ausführungsbeispiel, in welcher die Einrichtung 110 Rohrleitungen 112 und/oder Rohrleitungssegmente 114 mit einer Mehrzahl n von Pässen aufweist, beispielsweise wie hier dargestellt drei. Die Pässe können jeweils verschiedenen Längen L3, L4, L5 und/oder Durchmesser d3, d4, d5 aufweisen. Hinsichtlich der weiteren Elemente der Figur 9Ci kann auf die Beschreibung der Figur 6 verwiesen werden. Das Ausführungsbeispiel in Figur 9Cii zeigt einen Rohrtyp CiD2F2 und unterscheidet sich von Figur 9Ci darin, dass die Einrichtung 110 nur einen Isolator 124 aufweist, wobei statt des zweiten Isolators eine Erdung 125 vorgesehen ist. Das Ausführungsbeispiel in Figur 9Ciii zeigt einen Rohrtyp CiD3F2 und unterscheidet sich von Figur 9Cii darin, dass keine Erdung 125 vorgesehen ist. In Figur 9Civ, Rohrtyp CiD4F2, weist die Einrichtung 110, im Vergleich zu Figur 9Ciii, anstatt des Isolators nur eine Erdung 125 auf. Auch Ausführungsformen ohne Isolatoren 124 oder Erdungen 125 sind möglich, wie in Figur 9Cv, Rohrtyp CiD5F2, dargestellt. Figuren 9Ci bis 9Cvi zeigen Rohrtypen, bei welchen eine Einspeisung des Gleichstroms über einen negativen Pol und/oder Leiter und einen positiven Pol und/oder Leiter an der Rohrleitung 112 und/oder dem Rohrsegment 114 erfolgt. Figur 9Cvi zeigt einen Rohrtyp CiF1, bei welchem eine Einspeisung des Gleichstroms an einer beliebigen Stelle der Rohrleitung 112 und/oder des Rohrsegments 114 zwischen mindestens zwei negativen Polen und/oder Leitern erfolgt.

Die Einrichtung 110 kann eine Kombination von mindestens zwei verschiedenen Rohrtypen aufweisen, welche parallel und/oder in Reihe verschaltet sind. Beispielsweise kann die Einrichtung 110 Rohrleitungen 112 und/oder Rohrleitungssegmente 114 von unterschiedlichen Längen im Eintritt (L1) und/oder Austritt (L2) und/oder Übergang (L3) aufweisen. Beispielsweise kann die Einrichtung Rohrleitungen und/oder Rohrleitungssegmente mit einer Asymmetrie der Durchmesser im Eintritt (d1) und/oder Austritt (d2) und/oder Übergang (d3) aufweisen. Beispielsweise kann die Einrichtung 110 Rohrleitungen 112 und/oder Rohrleitungssegmente 114 mit einer unterschiedlichen Anzahl von Pässen aufweisen. Beispielsweise kann die Einrichtung 110 Rohrleitungen 112 und/oder Rohrleitungssegmente 114 mit Pässen mit unterschiedlichen Längen pro Pass und/oder unterschiedlichem Durchmesser pro Pass aufweisen.

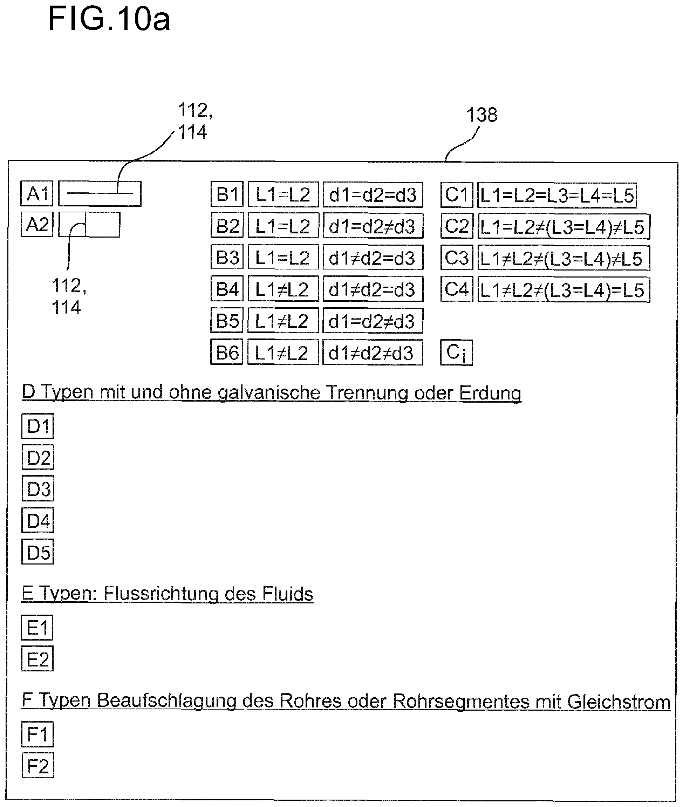

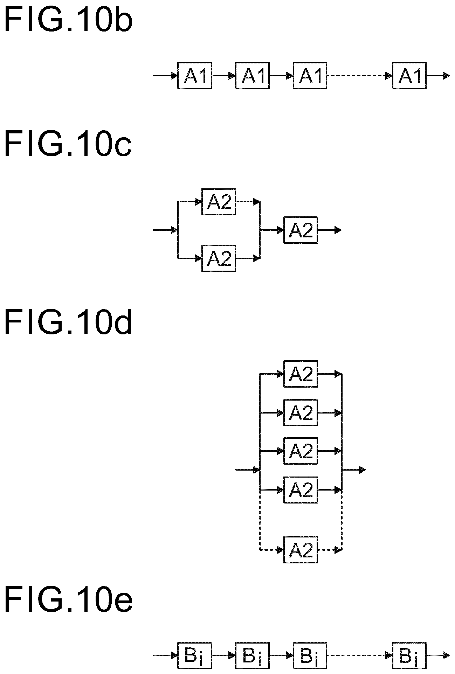

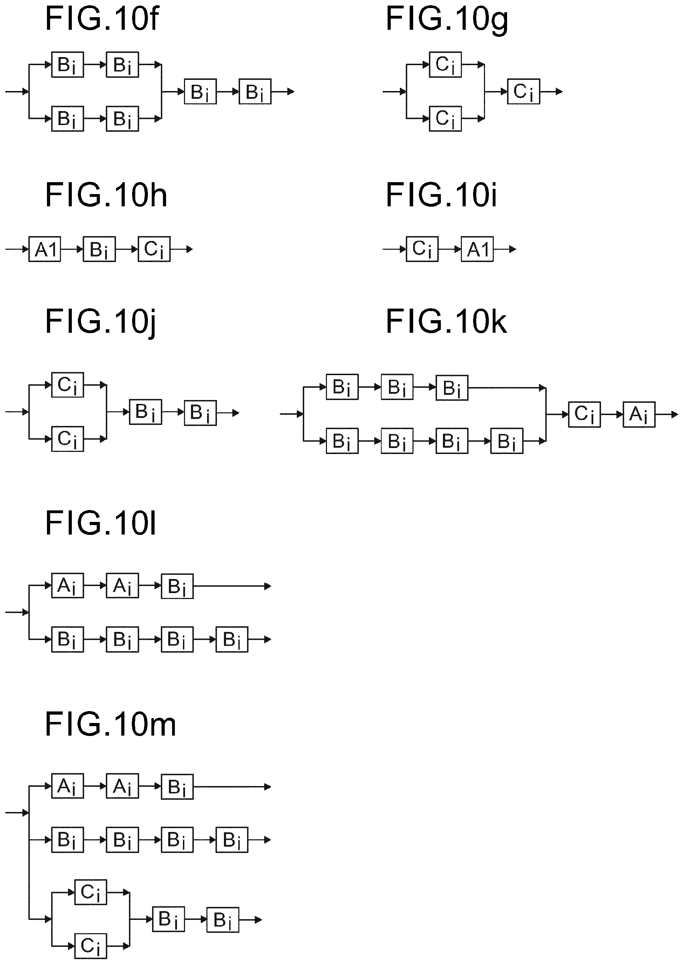

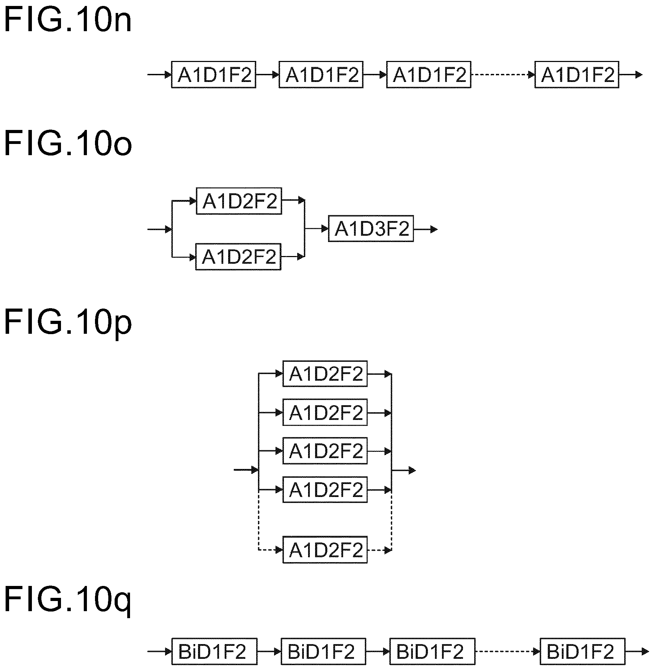

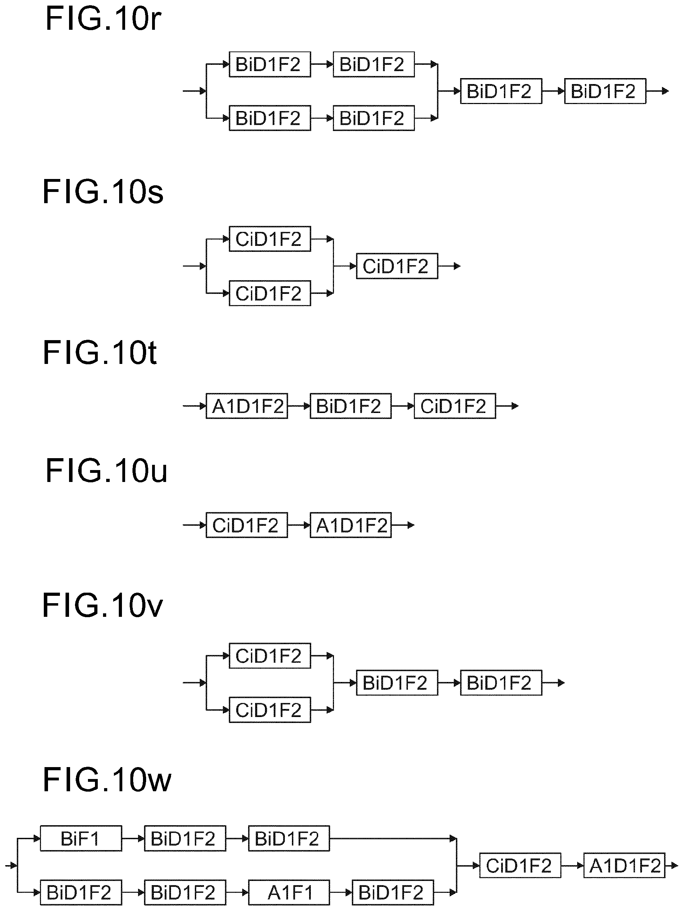

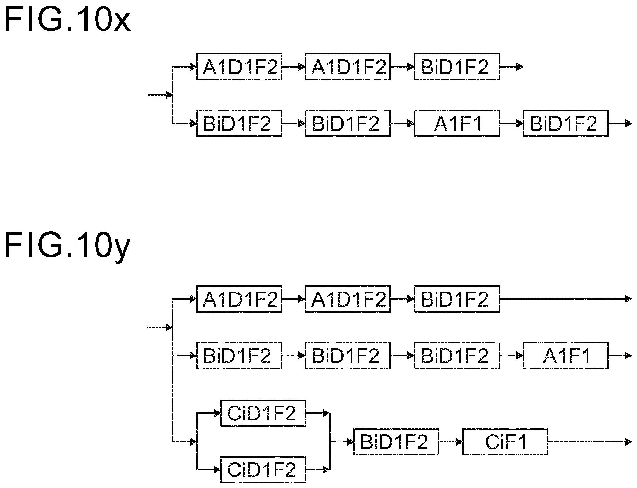

Grundsätzlich sind beliebige Kombinationen parallel und/oder in Reihe von allen Rohrtypen denkbar. Rohrleitungen 112 und/oder Rohrleitungssegmente 114 können in verschiedenen Rohrtypen in Form eines Baukastens 138 vorliegen und abhängig von einem Verwendungszweck ausgewählt und beliebig kombiniert werden. Figur 10A zeigt eine Ausführungsform eines Baukastens 138 mit verschiedenen Rohrtypen. Figuren 10 b bis y zeigen Ausführungsbeispiele von Kombinationen von Rohrleitungen 112 und/oder Rohrleitungssegmenten 114 vom gleichen und/oder verschiedenen Rohrtyp an. Figur 10b zeigt ein Ausführungsbeispiel mit drei horizontalen Rohrleitungen 112 und/oder Rohrleitungssegmenten 114 vom Rohrtyp A1, welche nacheinander angeordnet sind. Figur 10c zeigt zwei parallel geschaltete, vertikale Rohre vom Rohrtyp A2 und eine nachgeschaltete Rohrleitung 112 und/oder ein nachgeschaltetes Rohrleitungssegment 114 ebenfalls vom Rohrtyp A2. In Figur 10d sind eine Mehrzahl von Rohrleitungen 112 und/oder Rohrleitungssegmenten 114 vom Rohrtyp A2 gezeigt, welche sämtlich parallelgeschaltet sind. In Figur 10e ist eine Ausführungsformgezeigt, in welcher eine Mehrzahl von Rohrtypen der Kategorie B nacheinander angeordnet sind. Die Rohrleitungen 112 und/oder Rohrleitungssegmente 114 können hierbei identische oder verschiedene Rohrtypen der Kategorie B sein, welches mit Bi gekennzeichnet ist. Figur 10f zeigt eine Ausführungsform mit sechs Rohrleitungen 112 und/oder Rohrleitungssegmenten 114 der Kategorie B, wobei in zwei parallelen Strängen jeweils zwei Rohrleitungen 112 und/oder Rohrleitungssegmente 114 angeordnet sind und zwei weitere Rohrleitungen 112 und/oder Rohrleitungssegmente 114 nachgeschaltet sind. Figur 10g zeigt eine Ausführungsform mit Rohrleitungen 112 und/oder Rohrleitungssegmenten 114 der Kategorie C, wobei zwei Rohrleitungen 112 und/oder Rohrleitungssegmente 114 parallelgeschaltet und eine Rohrleitung 112 und/oder ein Rohrleitungssegment 114 nachgeschaltet ist. Auch Mischformen der Kategorien A, B und C sind möglich, wie in den Figuren 10h bis m gezeigt ist. Die Einrichtung 110 kann eine Mehrzahl von Feed-Einlässen und/oder Feed-Auslässen und/oder Produktionsströmen aufweisen. Die Rohrleitungen 112 und/oder Rohrleitungssegmente 114 von verschiedenem oder identischem Rohrtyp können parallel und/oder in Reihe mit mehreren Feed-Einlässen und/oder Feed-Auslässen angeordnet sein, wie beispielsweise in den Figuren 10k und 10m dargestellt ist.

Figuren 10n bis 10p zeigen beispielhafte Kombination von Rohrleitungen 112 und/oder von Rohrleitungssegmenten 114 der Kategorien A, D und F. Figuren 10q und 10r zeigen beispielhafte Kombination von Rohrleitungen 112 und/oder von Rohrleitungssegmenten 114 der Kategorien B, D und F. Figur 10s zeigt eine beispielshafte Kombination von Rohrleitungen 112 und/oder von Rohrleitungssegmenten 114 der Kategorien C, D und F. Figur 10t zeigt eine beispielshafte Kombination von Rohrleitungen 112 und/oder von Rohrleitungssegmenten 114 der Kategorien A, D und F. Figur 10u zeigt eine beispielshafte Kombination von Rohrleitungen 112 und/oder von Rohrleitungssegmenten 114 der Kategorien A, C, D und F. Figur 10v zeigt eine beispielshafte Kombination von Rohrleitungen 112 und/oder von Rohrleitungssegmenten 114 der Kategorien B, C, D und F. Figur 10w und 10 y zeigen beispielshafte Kombinationen von Rohrleitungen 112 und/oder von Rohrleitungssegmenten 114 der Kategorien A, B, C, D und F. Figur 10x zeigt eine beispielshafte Kombination von Rohrleitungen 112 und/oder von Rohrleitungssegmenten 114 der Kategorien A, B, D und F. Die Einrichtung 110 kann eine Mehrzahl von Feed-Einlässen und/oder Feed-Auslässen und/oder Produktionsströmen aufweisen. Die Rohrleitungen 112 und/oder Rohrleitungssegmente 114 von verschiedenem oder identischem Rohrtyp der Kategorien A, B, C, D, E und F können parallel und/oder in Reihe mit mehreren Feed-Einlässen und/oder Feed-Auslässen angeordnet sein. Beispiele für eine Mehrzahl von Feed-Einlässen und/oder Feed-Auslässen und/oder Produktionsströmen sind in den Figuren 10o, 10p, 10r, 10s, 10v bis 10 y dargestellt.

Durch eine Verwendung von Rohrleitungen 112 und/oder Rohrleitungssegmenten 114 von verschiedenen Rohrtypen kann eine genauere Temperaturführung, und/oder eine Anpassung der Reaktion bei schwankendem Feed und/oder eine selektive Ausbeute der Reaktion und/oder eine optimierte Verfahrenstechnik ermöglicht werden.

### Bezugszeichenliste

- 110: Einrichtung
- 111: Reaktivraum
- 112: Rohrleitung
- 114: Rohrleitungssegment
- 116: Schenkel
- 118: Rohrsystem
- 120: Einlass
- 122: Auslass
- 124: Isolator
- 125: Erdung
- 126: Gleichstrom- und/oder Gleichspannungsquelle
- 128: Positiver Pol/Leiter
- 130: Negativer Pol/Leiter
- 132: Heizdraht
- 134: Erste Rohrleitung
- 136: Zweite Rohrleitung
- 138: Baukasten

## Patentansprüche

1. Einrichtung (110) zum Erhitzen eines Fluides umfassend
- mindestens eine elektrisch leitfähige Rohrleitung (112) und/oder mindestens ein elektrisch leitfähiges Rohrleitungssegment (114) zur Aufnahme des Fluides, und
- mindestens eine Gleichstrom- und/oder Gleichspannungsquelle (126), wobei jeder Rohrleitung (112) und/oder jedem Rohrleitungssegment (114) je eine Gleichstrom- oder Gleichspannungsquelle (126) zugeordnet ist, welche mit der jeweiligen Rohrleitung (112) und/oder mit dem jeweiligen Rohrleitungssegment (114) verbunden ist, wobei die jeweilige Gleichstrom- und/oder Gleichspannungsquelle (126) dazu ausgebildet ist, einen elektrischen Strom in der jeweiligen Rohrleitung (112) und/oder in dem jeweiligen Rohrleitungssegment (114) zu erzeugen, welcher die jeweilige Rohrleitung (112) und/oder das jeweilige Rohrleitungssegment (114) durch Joulesche Wärme, welche bei Durchgang des elektrischen Stromes durch leitendes Rohrmaterial entsteht, zum Erhitzen des Fluides erwärmt, wobei die Einrichtung (110) eine Mehrzahl von Rohrleitungen (112) und/oder Rohrleitungssegmente (114) aufweist, wobei die Rohrleitungen (112) und/oder Rohrleitungssegmente (114) durchverbunden sind und somit ein Rohrsystem (118) zur Aufnahme des Fluides bilden, wobei die Rohrleitungen (112) und/oder Rohrleitungssegmente (114) und entsprechend zu- und abführenden Rohrleitungen miteinander fluidleitend verbunden sind, **dadurch gekennzeichnet, dass** die Rohrleitungen (112) und/oder Rohrleitungssegmente (114) und die zu- und abführenden Rohrleitungen galvanisch voneinander getrennt sind.

2. Einrichtung (110) nach dem vorhergehenden Anspruch, **dadurch gekennzeichnet, dass** die Einrichtung (110) L Rohrleitungssegmente (114) aufweist, wobei L eine natürliche Zahl größer oder gleich zwei ist, wobei die Rohrleitungssegmente (114) unsymmetrische Rohre und/oder eine Kombination davon aufweisen.

3. Einrichtung (110) nach einem der vorhergehenden Ansprüche, **dadurch gekennzeichnet, dass** die Einrichtung (110) Isolatoren (124) aufweist, welche eingerichtet sind zur galvanische Trennung zwischen den jeweiligen Rohrleitungen (112) und/oder Rohrleitungssegmenten (114) und den zu- und abführenden Rohrleitungen, wobei die Isolatoren (124) eingerichtet sind, um einen freien Durchfluss des Fluides sicherzustellen.

4. Einrichtung (110) nach einem der vorhergehenden Ansprüche, **dadurch gekennzeichnet, dass** mehrere oder sämtliche der Rohrleitungen (112) und/oder Rohrleitungssegmente (114) seriell und/oder parallel konfiguriert sind.

5. Einrichtung (110) nach einem der vorhergehenden Ansprüche, **dadurch gekennzeichnet, dass** die Einrichtung (110) eine Mehrzahl von Gleichstrom- und/oder Gleichspannungsquellen (126) aufweist, wobei die Gleichstrom- und/oder Gleichspannungsquellen (126) mit oder ohne Regelungsmöglichkeit mindestens einer elektrischen Ausgangsgröße ausgestaltet sind.

6. Einrichtung (110) nach dem vorhergehenden Anspruch, **dadurch gekennzeichnet, dass** die Einrichtung (110) zur Verbindung der Gleichstrom- oder Gleichspannungsquellen (126) und der jeweiligen Rohrleitung (112) und/oder mit dem jeweiligen Rohrleitungssegment (114) 2 bis N positive Pole und/oder Leiter (128) und 2 bis N negative Pole und/oder Leiter (130) aufweist, wobei N eine natürliche Zahl größer oder gleich drei ist.

7. Einrichtung (110) nach einem der zwei vorhergehenden Ansprüche, **dadurch gekennzeichnet, dass** die jeweiligen Gleichstrom- oder Gleichspannungsquellen (126) identisch oder verschieden ausgestaltet sind.

8. Einrichtung (110) nach dem vorhergehenden Anspruch, **dadurch gekennzeichnet, dass** die Einrichtung 2 bis M verschiedene Gleichstrom- und/oder Gleichspannungsquellen (126) aufweist, wobei M eine natürliche Zahl größer oder gleich drei ist, wobei die Gleichstrom- und/oder Gleichspannungsquellen (126) unabhängig voneinander elektrisch regelbar sind.

9. Anlage umfassend mindestens eine Einrichtung (110) nach einem der vorhergehenden Ansprüche.

10. Anlage nach dem vorhergehenden Anspruch **dadurch gekennzeichnet, dass** die Anlage ausgewählt ist aus der Gruppe bestehend aus: einem Steamcracker, einem Steamreformer, einer Vorrichtung zur Alkandehydrierung.

11. Verfahren zum Erhitzen eines Fluides unter Verwendung einer Einrichtung (110) gemäß einem der vorhergehenden, eine Einrichtung betreffenden Ansprüche, wobei das Verfahren die folgenden Schritte umfasst:
- Bereitstellen mindestens einer elektrisch leitfähigen Rohrleitung (112) und/oder mindestens eines elektrisch leitfähigen Rohrleitungssegments (114) zur Aufnahme des Fluides, wobei die Rohrleitungen (112) und/oder Rohrleitungssegmente (114) und entsprechend zu- und abführenden Rohrleitungen miteinander fluidleitend verbunden sind, wobei die Rohrleitungen (112) und/oder Rohrleitungssegmente (114) und die zu- und abführenden Rohrleitungen galvanisch voneinander getrennt sind;
- Aufnahme des Fluides in die Rohrleitung (112) und/oder das Rohrleitungssegment (114);
- Bereitstellen mindestens einer Gleichstrom- und/oder Gleichspannungsquelle (126), wobei jeder Rohrleitung (112) und/oder jedem Rohrleitungssegment (114) je eine Gleichstrom- oder Gleichspannungsquelle (126) zugeordnet ist, welche mit der jeweiligen Rohrleitung (112) und/oder mit dem jeweiligen Rohrleitungssegment (114) verbunden ist,
- Erzeugen eines elektrischen Stroms in der jeweiligen Rohrleitung (112) und/oder in dem jeweiligen Rohrleitungssegment (114) durch die jeweilige Gleichstrom- und/oder Gleichspannungsquelle (126), welcher die jeweilige Rohrleitung (112) und/oder das jeweilige Rohrleitungssegment (114) durch Joulesche Wärme, welche bei Durchgang des elektrischen Stromes durch leitendes Rohrmaterial entsteht, zum Erhitzen des Fluides erwärmt.

12. Verfahren nach dem vorhergehenden Anspruch, **dadurch gekennzeichnet, dass** als Fluid ein thermisch zu spaltender Kohlenwasserstoff, insbesondere ein thermisch zu spaltendes Gemisch aus Kohlenwasserstoffen, erhitzt wird.

13. Verfahren nach einem der vorhergehenden, ein Verfahren betreffenden Ansprüche,
**dadurch gekennzeichnet, dass** als Fluid Wasser oder Wasserdampf erhitzt wird, wobei jenes Wasser oder jener Wasserdampf insbesondere auf eine Temperatur im Bereich von 550°C bis 700°C erhitzt wird, und das Fluid zusätzlich einen thermisch zu spaltenden Kohlenwasserstoff, insbesondere ein Gemisch aus thermisch zu spaltenden Kohlenwasserstoffen, aufweist, wobei das zu erhitzende Fluid ein vorgewärmtes Gemisch aus thermisch zu spaltenden Kohlenwasserstoffen und Wasserdampf ist.

14. Verfahren nach einem der vorhergehenden, ein Verfahren betreffenden Ansprüche,
**dadurch gekennzeichnet, dass** als Fluid Verbrennungsluft eines Reformerofens vorgewärmt wird, beispielsweise auf eine Temperatur im Bereich von 200 °C bis 800 °C, bevorzugt 400 °C bis 700 °C.

## Claims

1. A device (110) for heating a fluid, comprising
- at least one electrically conductive pipeline (112) and/or at least one electrically conductive pipeline segment (114) for receiving the fluid, and
- at least one DC current and/or DC voltage source (126), where respectively one DC current or DC voltage source (126) is assigned to each pipeline (112) and/or each pipeline segment (114), said DC current or DC voltage source being connected to the respective pipeline (112) and/or the respective pipeline segment (114), where the respective DC current and/or DC voltage source (126) is embodied to produce an electric current in the respective pipeline (112) and/or in the respective pipeline segment (114), said electric current warming up the respective pipeline (112) and/or the respective pipeline segment (114) by Joule heating, which arises when the electric current passes through conductive pipe material, for the purposes of heating the fluid, where the device (110) comprises a plurality of pipelines (112) and/or pipeline segments (114), where the pipelines (112) and/or pipeline segments (114) are through-connected and consequently form a pipe system (118) for receiving the fluid, where the pipelines (112) and/or pipeline segments (114) and appropriate supply and removal pipelines are connected to one another in fluid conducting fashion, wherein the pipelines (112) and/or pipeline segments (114) and the supply and removal pipelines are galvanically isolated from one another.

2. The device (110) according to the preceding claim, wherein the device (110) comprises L pipeline segments (114), where L is a natural number greater than or equal to two, where the pipeline segments (114) comprise asymmetric pipes and/or a combination thereof.

3. The device (110) according to either of the preceding claims, wherein the device (110) comprises insulators (124) that are configured for galvanic isolation between the respective pipelines (112) and/or pipeline segments (114) and the supply and removal pipelines, where the insulators (124) are configured to ensure a free through-flow of the fluid.

4. The device (110) according to any one of the preceding claims, wherein a plurality or all of the pipelines (112) and/or pipeline segments (114) are configured in series and/or in parallel.

5. The device (110) according to any one of the preceding claims, wherein the device (110) comprises a plurality of DC current and/or DC voltage sources (126), where the DC current and/or DC voltage sources (126) are embodied with or without an option for closedloop control of at least one electrical output variable.

6. The device (110) according to the preceding claim, wherein the device (110) for connecting the DC current or DC voltage sources (126) and the respective pipeline (112) and/or to the respective pipeline segment (114) comprises 2 to N positive terminals and/or conductors (128) and 2 to N negative terminals and/or conductors (130), where N is a natural number greater than or equal to three.

7. The device (110) according to either of the two preceding claims, wherein the respective DC current or DC voltage sources (126) are configured identically or differently.

8. The device (110) according to the preceding claim, wherein the device comprises 2 to M different DC current and/or DC voltage sources (126), where M is a natural number greater than or equal to three, where the DC current and/or DC voltage sources (126) are electrically controllable independently of one another.

9. An installation comprising at least one device (110) according to any one of the preceding claims.

10. The installation according to the preceding claim, wherein the installation is selected from the group consisting of: a steam cracker, a steam reformer, an apparatus for alkane dehydrogenation.

11. A method for heating a fluid by using a device (110) according to any one of the preceding claims relating to a device, the method comprising the following steps:
- providing at least one electrically conductive pipeline (112) and/or at least one electrically conductive pipeline segment (114) for receiving the fluid, where the pipelines (112) and/or pipeline segments (114) and appropriate supply and removal pipelines are connected to one another in fluid conducting fashion, where the pipelines (112) and/or pipeline segments (114) and the supply and removal pipelines are galvanically isolated from one another;
- receiving the fluid in the pipeline (112) and/or the pipeline segment (114);
- providing at least one DC current and/or DC voltage source (126), where respectively one DC current or DC voltage source (126) is assigned to each pipeline (112) and/or each pipeline segment (114), said DC current or DC voltage source being connected to the respective pipeline (112) and/or to the respective pipeline segment (114),
- producing an electric current in the respective pipeline (112) and/or the respective pipeline segment (114) by the respective DC current and/or DC voltage source (126), said electric current warming up the respective pipeline (112) and/or the respective pipeline segment (114) by Joule heating, which arises when the electric current passes through conductive pipe material, for the purposes of heating the fluid.

12. The method according to the preceding claim, wherein a hydrocarbon to be thermally cracked, in particular a mixture of hydrocarbons to be thermally cracked, is heated as a fluid.

13. The method according to any one of the preceding claims relating to a method, wherein water or steam is heated as a fluid, where said water or said steam is more particularly heated to a temperature in the range of 550°C to 700°C, and the fluid additionally comprises a hydrocarbon to be thermally cracked, in particular a mixture of hydrocarbons to be thermally cracked, where the fluid to be heated is a preheated mixture of hydrocarbons to be thermally cracked and steam.

14. The method according to any one of the preceding claims relating to a method, wherein combustion air of a reformer furnace is preheated as a fluid, for example to a temperature in the range of 200°C to 800°C, preferably 400°C to 700°C.

## Revendications

1. Dispositif (110) destiné à chauffer un fluide, ledit dispositif comprenant
- au moins une conduite électriquement conductrice (112) et/ou au moins un segment de conduite électriquement conductrice (114) destinée à recevoir le fluide, et
- au moins une source de courant continu et/ou de tension continue (126),
chaque conduite (112) et/ou chaque segment de conduite (114) étant associée à une source de courant continu ou de tension continue (126) qui est reliée à la conduite respective (112) et/ou au segment de conduite respectif (114), la source de courant continu et/ou de tension continue respective (126) étant conçue pour générer un courant électrique dans la conduite respective (112) et/ou dans le segment de conduite respectif (114) qui relie la conduite respective (112) et/ou le segment de conduite respectif (114) chauffé par effet Joule, qui est généré lorsque le courant électrique passe à travers le matériau de conduite conducteur, afin de chauffer le fluide, le dispositif (110) comportant une pluralité de conduites (112) et/ou de segments de conduite (114), les conduites (112) et/ou les segments de conduite (114) étant reliés entre eux et formant ainsi un système de conduites (118) destinés à recevoir le fluide, les conduites (112) et/ou les segments de conduite (114) et les conduites d'alimentation et d'évacuation correspondantes étant reliées en communication fluidique entre eux, **caractérisé en ce que** les conduites (112) et/ou les segments de conduite (114) et les conduites d'alimentation et d'évacuation sont séparés galvaniquement les uns des autres.

2. Dispositif (110) selon la revendication précédente, **caractérisé en ce que** le dispositif (110) comporte L segments de conduite (114), L étant un entier naturel supérieur ou égal à deux, les segments de conduite (114) comportant des tubes asymétriques et/ou une combinaison de ceux-ci.

3. Dispositif (110) selon l'une des revendications précédentes, **caractérisé en ce que** le dispositif (110) comporte des isolateurs (124) qui sont conçus pour séparer galvaniquement les conduites respectives (112) et/ou les segments de conduite (114) et les conduites d'alimentation et d'évacuation, les isolateurs (124) étant conçus pour assurer la libre circulation du fluide.

4. Dispositif (110) selon l'une des revendications précédentes, **caractérisé en ce qu'**une pluralité ou la totalité des conduites (112) et/ou des segments de conduite (114) sont configurés en série et/ou en parallèle.

5. Dispositif (110) selon l'une des revendications précédentes, **caractérisé en ce que** le dispositif (110) comporte une pluralité de sources de courant continu et/ou de tension continue (126),
les sources de courant continu et/ou de tension continue (126) étant conçues avec ou sans possibilité de régulation d'au moins une grandeur de sortie électrique.

6. Dispositif (110) selon la revendication précédente, **caractérisé en ce que**, afin de relier les sources de courant continu ou de tension continue (126) et la conduite respective (112) et/ou le segment de conduite respectif (114), le dispositif (110) comporte a 2 à N pôles et/ou conducteurs positifs (128) et 2 à N pôles et/ou conducteurs négatifs (130), N étant un entier naturel supérieur ou égal à trois.

7. Dispositif (110) selon l'une des deux revendications précédentes, **caractérisé en ce que** les sources de courant continu ou de tension continue respectives (126) sont conçues de manière identique ou différente.

8. Dispositif (110) selon la revendication précédente, **caractérisé en ce que** le dispositif comporte 2 à M sources de courant continu et/ou de tension continue différentes (126), M étant un entier naturel supérieur ou égal à trois, les sources de courant continu et/ou de tension continue (126) pouvant être régulées électriquement indépendamment les unes des autres.

9. Installation comprenant au moins un dispositif (110) selon l'une des revendications précédentes.

10. Installation selon la revendication précédente, **caractérisée en ce que** l'installation est choisie dans le groupe comprenant : un vapocraqueur, un vaporeformeur, un dispositif de déshydrogénation d'alcanes.

11. Procédé de chauffage d'un fluide à l'aide d'un dispositif (110) selon l'une des revendications précédentes relative à un dispositif, le procédé comprenant les étapes suivantes :
- fournir au moins une conduite électriquement conductrice (112) et/ou au moins un segment de conduite électriquement conductrice (114) destinés à recevoir le fluide, les conduites (112) et/ou les segments de conduite (114) et les conduites d'alimentation et d'évacuation correspondantes étant en communication fluide les uns avec les autres, les conduites (112) et/ou les segments de conduite (114) et les conduites d'alimentation et d'évacuation étant séparés galvaniquement les uns des autres ;
- recevoir le fluide dans la conduite (112) et/ou le segment de conduite (114) ;
- fournir au moins une source de courant continu et/ou de tension continue (126), chaque conduite (112) et/ou chaque segment de conduite (114) étant associés à une source de courant continu ou de tension continue (126) qui est reliée à la conduite respective (112) et/ou au segment de conduite respectif (114),
- générer un courant électrique dans la conduite respective (112) et/ou dans le segment de conduite respectif (114) par le biais de la source de courant continu et/ou de tension continue respective (126) qui chauffe la conduite respective (112) et/ou le segment de conduite respectif (114) par effet Joule, qui est généré lorsque le courant électrique passe à travers un matériau de conduite conducteur, afin de chauffer le fluide.

12. Procédé selon la revendication précédente, **caractérisé en ce qu'**un hydrocarbure à craquer thermiquement, notamment un mélange d'hydrocarbures à craquer thermiquement, est chauffé comme fluide.

13. Procédé selon l'une des revendications précédentes concernant un procédé, **caractérisé en ce que** de l'eau ou de la vapeur est chauffée comme fluide, ladite eau ou ladite vapeur d'eau étant chauffée notamment à une température dans la gamme allant de 550 °C à 700 °C, et le fluide comportant en outre un hydrocarbure à craquer thermiquement, notamment un mélange d'hydrocarbures à craquer thermiquement, le fluide à chauffer étant un mélange préchauffé d'hydrocarbures à craquer thermiquement et de vapeur.

14. Procédé selon l'une des revendications précédentes concernant un procédé, **caractérisé en ce que** de l'air de combustion d'un four de reformeur est préchauffé comme fluide, par exemple à une température dans la gamme allant de 200 °C à 800 °C, de préférence 400 °C à 700 °C.
